# EUROPÄISCHE PATENTANMELDUNG

(11) **EP 4 276 228 A1**
(43) Veröffentlichungstag der Anmeldung: **15.11.2023**
(21) Anmeldenummer: 22175157.1
(22) Anmeldetag: 24.05.2022
(51) Int. Cl.: D01H 9/18

(54) **SELBSTFAHRENDES FAHRZEUG ZUM TRANSPORTIEREN EINES AUFNAHMEBEHÄLTERS FÜR EIN FASERBAND UND KANNENVORRICHTUNG MIT EINEM AUFNAHMEBEHÄLTER**

(30) Priorität: 10.05.2022 DE 102022111675
(71) Anmelder: Trützschler Group SE, 41199 Mönchengladbach (DE)
(72) Erfinder: Boßmann, Johannes, 47665 Sonsbeck (DE)

(57) **Zusammenfassung**

Die vorliegende Erfindung betrifft ein selbstfahrendes Fahrzeug (3) zum Transportieren eines Aufnahmebehälters (2; 102; 202) für ein Faserband zwischen faserbandabliefernden und faserbandgespeisten Textilmaschinen über einen Untergrund (4), wobei das Fahrzeug (3) ein Fahrwerk (24) mit mehreren Laufrädern (6, 7, 8, 9), einen vom Fahrwerk (24) getragenen Fahrzeugkörper (25), eine am Fahrzeugkörper (25) angeordnete Transportfläche (26), auf der der Aufnahmebehälter (2; 102; 202) aufstellbar ist, Befestigungselemente (11.2) zum Befestigen des Aufnahmebehälters (2; 102; 202) am Fahrzeugkörper (25) und ein am Fahrzeugkörper (25) angeordnetes Bordnetz (23) mit einem elektrischen Energiespeicher (28), einer elektrischen Antriebseinheit (32) und einer Steuerungseinheit (42) aufweist, dadurch gekennzeichnet, dass das Fahrzeug (3) derart dimensioniert ist, dass in einem montierten Zustand, in dem der Aufnahmebehälter (2; 102; 202) auf der Transportfläche (26) aufgestellt und am Fahrzeugkörper (25) befestigt ist, ein Behälterboden (13) des Aufnahmebehälters (2) das Fahrwerk (24), die elektrische Antriebseinheit (32), den elektrischen Energiespeicher (28) und die Transportfläche (26) vollständig überdeckt. Weiterhin betrifft die vorliegende Erfindung eine Kannenvorrichtung (1) mit dem selbstfahrenden Fahrzeug (3) und dem Aufnahmebehälter (2; 102; 202).

## Beschreibung

Die vorliegende Erfindung betrifft ein selbstfahrendes Fahrzeug zum Transportieren eines Aufnahmebehälters für ein Faserband zwischen faserbandabliefernden und faserbandgespeisten Textilmaschinen über einen Untergrund, wobei das Fahrzeug ein Fahrwerk mit mehreren Laufrädern, einen vom Fahrwerk getragenen Fahrzeugkörper, eine an dem Fahrzeugkörper angeordnete Transportfläche für den Aufnahmebehälter, Befestigungsmittel zum Befestigen des Aufnahmebehälters am Fahrzeugkörper und ein am Fahrzeugkörper angeordnetes Bordnetz mit einem elektrischen Energiespeicher, einer elektrischen Antriebseinheit und einer Steuerungseinheit aufweist. Weiterhin betrifft die vorliegende Erfindung eine Kannenvorrichtung mit einem Aufnahmebehälter für ein Faserband und einem selbstfahrenden Fahrzeug.

In Spinnereien sind üblicherweise mehrere Hundert Spinnkannen, auch Faserbandkannen oder kurz Kannen genannt, im Einsatz, die bislang noch ganz überwiegend per Hand zwischen den Textilmaschinen verfahren werden. Dies geht mit einem hohen Personaleinsatz einher. Um diesen zu reduzieren, gibt es bereits seit mehreren Jahrzehnten Bestrebungen, den Transport der Kannen zu automatisieren.

Die DE 35 32 172 A1 offenbart ein Transportsystem für Spinnkannen mit Transportwagen, die im Spinnereiboden eingelassenen Induktionsschleifen folgen.

Aus der CN 212685777 U ist ein selbstfahrendes Fahrzeug, ein sogenanntes Automatic Guided Vehicle, kurz AGV, zum automatischen Tragen und Fördern von Spinnkannen bekannt. Das Fahrzeug weist eine verstellbare Spannvorrichtung auf, die sich an verschiedene Größen der Kannen anpassen kann. Die Kanne wird durch eine Transfervorrichtung oben auf dem Fahrzeug platziert und durch die von außen an die Kanne ansetzende Spannvorrichtung fixiert. Nachdem das Fahrzeug die Kanne transportiert und wieder abgeladen hat, steht dieses für den Transport der nächsten Kanne bereit.

Die DE 36 21 370 A1 offenbart einen automatisch gesteuerten Transportwagen, umfassend ein Fahrgestell mit einem Elektromotor für den Fahrantrieb und vier Laufräder, die auf zwei gelenkten Fahrachsen sitzen. Der Transportwagen weist eine Lade- bzw. Entladeeinrichtung für die Spinnkanne in Form eines am Fahrgestell angeordneten Greifers auf. Dieser hat zwei horizontale Teleskopzylinder, die über den Transportwagen hinaus fahrbar sind, um die zu transportierende Kanne greifen und auf eine mit einer Rollenbahn versehene Transportfläche des Transportwagen ziehen zu können. Weiterhin weist der Greifer einen Druckzylinder auf, um die Kanne von außen zu umgreifen, wobei die Klemmstücke des Greifers gegengleich zur runden Oberfläche der Kanne gebogen sind. Während des Transports ist die Kanne zwischen den Laufrädern untergebracht.

Als nachteilig wird erachtet, dass bei den bekannten Systemen die Spinnkannen erhöht stehen müssen, um diese auf den Transportwagen aufladen bzw. von diesem wieder abladen zu können. Zudem benötigt ein solcher Transportwagen für das Auf- und Abladen sowie für das Sichern der Kanne auf dem Transportwagen Aktuatoren und diverse Einzelbauteile, wodurch sich die Herstellungskosten erhöhen. Um die Kosten zu reduzieren, sind zwar automatisierte Transportwagen bekannt, die mehrere Kannen gleichzeitig transportieren können, wie in der EP 0 877 107 B2 gezeigt. Derartige Transportsysteme sind allerdings nur für Anwendungen geeignet, bei denen die Textilmaschinen eine Vielzahl gleichartiger Arbeitsstellen aufweisen, wie dies bei Flyern oder auch Offenend-Spinnmaschinen der Fall ist.

Aus der US 2020/0306905 A1 ist ein weiteres AGV bekannt, bei dem die zu transportierende Kanne auf deren eigenen Rollen verschoben werden soll. Hierzu wird das AGV an die auf dem Untergrund stehende Kanne herangefahren, spannt diese ein und schleppt die Kanne mit sich mit. Damit läuft das AGV, wie ein menschlicher Bediener, neben der Kanne her.

Aufgabe der vorliegenden Erfindung ist es, ein selbstfahrendes Fahrzeug bereitzustellen, das sich besser in den laufenden Betrieb einer Spinnerei integrieren lässt und kostengünstiger in deren Herstellung ist. Weiterhin ist es Aufgabe der vorliegenden Erfindung, eine Kannenvorrichtung bereitzustellen, die sich besser in den laufenden Betrieb einer Spinnerei integrieren lässt und kostengünstiger in deren Herstellung ist.

Die Aufgabe wird durch ein selbstfahrendes Fahrzeug der eingangs genannten Art dadurch gelöst, dass das Fahrzeug derart dimensioniert ist, dass in einem montierten Zustand, in dem der Aufnahmebehälter mit der Transportfläche in Anlage und am Fahrzeug befestigt ist, der Aufnahmebehälter das Fahrwerk, die elektrische Antriebseinheit und die Transportfläche überdeckt.

Mit anderen Worten ist das Fahrzeug derart relativ zum Aufnahmebehälter dimensioniert bzw. mit einer Erstreckung senkrecht zur Hochachse des Fahrzeugs bereitgestellt, dass der Flächenbedarf bzw. die Funktionsfläche des Fahrzeugs im Betrieb zumindest im Wesentlichen auf die Größe der Stell- bzw. Querschnittsfläche des Aufnahmebehälters beschränkt ist. Als Stellfläche des Aufnahmebehälters ist, losgelöst vom Fahrzeug, diejenige Bodenfläche des Untergrunds zu verstehen, die für den Aufnahmebehälter im aufgestellten Zustand benötigt wird, unabhängig davon, ob dieser den Untergrund berührt oder nicht. Die Funktionsfläche des Fahrzeugs ist diejenige Bodenfläche des Untergrunds, die von dem Fahrzeug im Betrieb überdeckt werden. Die Baugröße des Fahrzeugs ist derart bemessen, dass das Fahrzeug zumindest im Wesentlichen unter dem Aufnahmebehälter Platz findet, wenn dieser mit der Transportfläche in Anlage und auf dem Fahrzeug mittels der Befestigungselemente befestigt bzw. montiert ist (= montierter Zustand). Zumindest im Wesentlichen soll dabei umfassen, dass im montierten Zustand das Fahrzeug nahezu vollständig unterhalb des Aufnahmebehälters angeordnet ist, wobei nur einzelne Komponenten, insbesondere aus dem Bordnetz, den Aufnahmebehälter seitlich überragen können, sofern hierfür eine technische Notwendigkeit besteht. Grundsätzlich möglich ist aber auch, dass das gesamte Fahrzeug vom Aufnahmebehälter vollständig überdeckt ist. Das Fahrwerk, die elektrische Antriebseinheit und die Transportfläche liegen somit im montierten Zustand unter dem Aufnahmebehälter, werden also in Draufsicht von oben vom Aufnahmebehälter verdeckt. Von Vorteil ist, dass das Fahrzeug im montierten Zustand weitestgehend durch den Aufnahmebehälter geschützt ist. Aus dem geringen Flächenbedarf ergibt sich weiterhin der Vorteil, dass das Fahrzeug im montierten Zustand, wie eine von Hand verschiebbare Standardkanne, Arbeitsbereiche der Textilmaschinen, wie ein Füllplatz an einem Kannenwechsler oder dergleichen, befahren und somit auch in den Arbeitsbereichen zur Ausführung von Bewegungen genutzt werden kann. Beispielsweise kann das Fahrzeug auf einem Kannendrehteller der Textilmaschine mitgedreht werden oder das Fahrzeug kann unter einem Ablageteller der Textilmaschine sich selbst drehen.

Räumliche Angaben, wie "oben", "unten", "oberhalb" und "unterhalb", sofern sie verwendet werden, sollen lediglich die relative Anordnung der betreffenden Bauteile zueinander beschreiben. Diese Angaben beziehen sich auf das Fahrzeug, wenn dieses mit seinen Laufrädern auf dem Untergrund steht. Die Hochachse des Fahrzeugs steht normal auf dem Untergrund. Der Untergrund kann ein Hallenboden in der Spinnerei, auf dem die Textilmaschinen aufgestellt sein können, eine ortsfeste Rampe zum Überbrücken von Höhenunterschieden, ein Flurboden eines Kannenwechslers der Textilmaschine oder dergleichen sein. Die faserbandabliefernden bzw. faserbandgespeisten Textilmaschinen können beispielsweise Spinnereivorbereitungsmaschinen, wie Strecken, Karden, Kämmmaschinen, Bandwickelmaschinen und dergleichen und/oder Spinnereimaschinen, wie Rotorspinnmaschinen, Luftspinnmaschinen, Flyer und dergleichen sein.

Der Aufnahmebehälter kann auf dem Fahrzeug abgestellt sein, quasi auf dem Fahrzeugkörper ruhen. Weiterhin kann die Transportfläche an einer vom Untergrund abgewandten Oberseite des Fahrzeugkörpers ausgebildet sein. Des Weiteren kann die Transportfläche in Hochrichtung des Fahrzeugs oberhalb der Laufräder angeordnet sein. Insbesondere schließt das Fahrzeug nach oben hin mit der Transportfläche ab. Damit kann die Transportfläche diejenige Fläche des Fahrzeugs sein, auf der der Aufnahmebehälter im montierten Zustand abgestellt ist. Die Transportfläche des Fahrzeugs ist kleiner als oder maximal gleich groß wie die Stellfläche des Aufnahmebehälters. Bei einem als "Rundkanne" ausgebildeten Aufnahmebehälter ist die Stellfläche kreisförmig und bei einer "Rechteckkanne" entsprechend rechteckig. Die Form der Transportfläche kann der Form der Stellfläche entsprechen, wobei grundsätzlich auch eine andere Form möglich und mitunter auch bevorzugt sein kann. Die Transportfläche kann beispielsweise in Form eines Polygons mit drei, vier, fünf, sechs, sieben, acht oder mehr als acht Ecken, in Form eines Sterns oder dergleichen oder auch kreisförmig oder rechteckig gestaltet sein. Auf diese Weise kann das Gewicht des Fahrzeugs reduziert werden. Die Transportfläche kann eine durchgehende, d. h. in sich zusammenhängende Fläche sein oder aus mehreren voneinander beanstandeten Einzelflächen gebildet sein. Die Transportfläche liegt vorzugsweise in einer Stützebene, die parallel zum Untergrund aufgerichtet sein kann.

In bevorzugter Weise sind die Befestigungselemente ausgelegt, um das Fahrzeug mit einem definierten Aufnahmebehälter auf Dauer zu verbinden. Ein Wechsel ist im Betrieb somit nicht vorgesehen. Dadurch kommt das Fahrzeug mit wenigen Bauteilen aus und ist insgesamt kostengünstig und wartungsfreundlich. Vorzugsweise ist nur bei Defekt des Fahrzeugs oder zu Wartungszwecken eine Trennung notwendig, um den Aufnahmebehälter gegebenenfalls mit einem anderen Fahrzeug auszustatten, und vice versa. Insbesondere können die fahrzeugseitigen Befestigungselemente im montierten Zustand mit behälterseitigen Befestigungselementen zusammenwirken. Hierfür eignen sich besonders manuell lösbare Befestigungsmittel, wie beispielsweise Schraubverbindungen.

Gemäß einer ersten Ausgestaltung können die Befestigungselemente an dem Fahrzeugkörper derart angeordnet sein, dass diese im montierten Zustand von dem Aufnahmebehälter überdeckt sind. Auf diese Weise kann eine Blindbefestigung bereitgestellt werden. Die fahrzeugseitigen Befestigungselemente können zum Beispiel am Fahrzeug, bzw. am Fahrzeugkörper ausgebildete Bohrungen sein, die mit den behälterseitigen Befestigungselementen, beispielsweise Gewindebolzen und Muttern zusammenwirken. Die Bohrungen können parallel zur Hochachse ausgerichtet sein, um den Aufnahmebehälter auf einfache Weise von oben auf das Fahrzeug aufstellen und am Fahrzeugkörper befestigen zu können. Die Muttern können von unten auf die durch die Bohrungen ragenden Gewindebolzen aufgeschraubt werden. Die fahrzeugseitigen Befestigungselemente können in der von der Transportfläche aufgespannten Stützebene oder weiter zurückgesetzt angeordnet sein.

Gemäß einer zweiten Ausgestaltung, die alternativ zur ersten Ausgestaltung vorgesehen sein kann, können die fahrzeugseitigen Befestigungselemente seitlich am Fahrzeugkörper abstehen, respektive radial zur Hochachse ausgerichtet sein. Beispielweise können dies angeformte Stege insbesondere mit Gewindeabschnitt oder nach Aufsetzen des Aufnahmebehälters eingesetzte Bolzen, insbesondere Gewindebolzen sein, die mit behälterseitigen Befestigungselementen, beispielsweise in einer Seitenwand des Aufnahmebehälters ausgebildete Aussparungen, wie Rundbohrungen oder Langlöcher, respektive nach unten hin offenen Schlitzen, zusammenwirken können. Damit kann der Aufnahmebehälter auf einfache Weise von oben auf das Fahrzeug aufgestellt und mittels auf die Gewindebolzen aufgeschraubter Muttern am Fahrzeug befestigt werden. Die Muttern können von außen auf die durch die Aussparungen ragenden Gewindebolzen aufgeschraubt werden.

Der Fahrzeugkörper kann eine Grundplatte aufweisen, wobei eine vom Fahrwerk abgewandte Oberseite der Grundplatte die Transportfläche umfassen kann. Die Grundplatte ist vorzugsweise eine starre Platte und kann eine durchgehend geschlossene Platte sein oder ebenso Bohrungen, Aussparungen, Ausnehmungen oder dergleichen aufweisen. Insbesondere ist die Grundplatte am Fahrzeugkörper angeformt oder lösbar befestigt. Durch die lösbare Ausgestaltung kann die Grundplatte auf einfache Weise gegen eine unterschiedlich große Grundplatte ausgetauscht werden, um das Fahrzeug für den Transport von größeren oder kleineren Aufnahmebehältern herzurichten. Insbesondere sind die fahrzeugseitigen Befestigungselemente an der Grundplatte ausgebildet. Die fahrzeugseitigen Befestigungselemente können eine Zentrierung des Aufnahmebehälters auf dem Fahrzeug ermöglichen, sodass eine Behälterachse des zu transportierenden Aufnahmebehälters und eine fahrzeugfeste Hochachse bzw. Gierachse des Fahrzeugs zusammenfallen können. Gemäß einer Ausgestaltung umfassen die fahrzeugseitigen Befestigungselemente in der Grundplatte ausgebildete Durchgangsbohrungen, die parallel zur Hochachse verlaufen. Mittels auf die Gewindebolzen aufgeschraubter Muttern kann dann der Aufnahmebehälter und der Fahrzeugkörper, insbesondere die Grundplatte gegeneinander verspannt werden. Gemäß einer weiteren Ausgestaltung können die fahrzeugseitigen Befestigungselemente an einer um die Hochachse des Fahrzeugs verlaufenden Umfangsfläche der Grundplatte angeordnet sein.

Weiterhin kann vorgesehen sein, dass zumindest zwei der Laufräder als Starrräder ausgebildet sind, die in Längsrichtung des Fahrzeuges ausgerichtet und in Bezug auf den Fahrzeugkörper fest liegende Drehachsen aufweisen. Die Starrräder sind somit nicht lenkbar, sondern in der Längsrichtung fest ausgerichtet. Vorzugsweise sind die Starrräder ungefedert am Fahrzeugkörper angeordnet. Die Drehachsen der beiden Starrräder können auf einer gedachten Gerade liegen. Die gedachte Gerade teilt den Fahrzeugkörper in der Längsrichtung in einen Vorderabschnitt und einen Hinterabschnitt, die grundsätzlich zumindest in etwa gleich groß sein können. Die Gierachse kann auf der gedachten Gerade normal stehen. Die Gierachse ist die Hochachse, um die sich das Fahrzeug dreht. Wenn die Gierachse normal auf der gedachten Gerade steht, schneidet diese die gedachte Gerade im rechten Winkel. Die beiden Drehachsen können derart angeordnet sein, dass die gedachte Gerade auf der Diagonalen des Aufnahmebehälters liegt, wenn der Aufnahmebehälter einen zylindrischen Querschnitt aufweist. Die gedachte Gerade kann somit in einer Mittelebene liegen, auf der die Längsrichtung normal steht. Im Ergebnis kann sich das Fahrzeug auf der Stelle, respektive um seine Gierachse drehen.

Des Weiteren kann zumindest eines der Laufräder als Stützrad, das um eine Schwenkachse schwenkbar gestaltet ist, ausgebildet sein. In bevorzugter Weise ist das zumindest eine Stützrad um seine Schwenkachse, die parallel zur Hochachse des Fahrzeugs ausgerichtet sein kann, frei drehbar. Um der Kippgefahr des Fahrzeugs vorzubeugen, kann das zumindest eine Stützrad in der Querrichtung zwischen den beiden Starrrädern angeordnet sein. Insbesondere ist das zumindest eine Stützrad in der Längsrichtung beabstandet von den Querachsen der Starrräder am Vorderabschnitt oder am Hinterabschnitt des Fahrzeugkörpers abgestützt.

Die Laufräder können insbesondere direkt am Fahrzeugkörper angeordnet sein. Vorzugsweise stehen alle Laufräder im Kontakt mit dem Untergrund, wenn das Fahrzeug über den Boden fährt. Grundsätzlich ist eine Dreipunkt-Abstützung mit drei Laufrädern, insbesondere zwei Starrrädern und einem Stützrad, hinsichtlich der Stabilität des Fahrzeugs auf dem Untergrund von Vorteil. Allerdings hat sich gezeigt, dass es aufgrund der Platzverhältnisse und der Vielzahl an Kannen in der Spinnerei von Vorteil sein kann, wenn das Fahrzeug auf der Stelle wenden kann. Dies ist durch die vorgeschlagene in Bezug auf die Längsrichtung mittige Anordnung der Starrräder sowie der zwei Stützräder möglich. Vorzugsweise ist das Fahrwerk vierrädrig ausgestaltet. Das erste Stützrad kann am Vorderabschnitt und das zweite Stützrad kann am Hinterabschnitt angeordnet sein. Ein weiterer Vorteil ist, dass das Fahrzeug neben ebenen Bodenflächen auch schräg verlaufende Bodenflächen von Rampen oder dergleichen besonders gut und ohne zu kippen befahren kann. Zweckmäßigerweise ist zumindest eines der beiden Stützräder gefedert am Grundkörper abgestützt. Insbesondere ist nur das nachlaufende, respektive das im Hinterabschnitt angeordnete zweite Stützrad gefedert. Dadurch wird ein Aufschaukeln des Fahrzeugs beim Befahren von schrägen Flächen, beim Überfahren von Unebenheiten im Untergrund sowie beim Anfahren und Abbremsen vermieden.

Um das Fahrzeug auf einfache Weise anzutreiben und zu lenken, kann die Antriebseinheit mit den beiden Starrrädern antriebsverbunden sein. Die Lenkbewegungen können durch Veränderung der Drehgeschwindigkeit der Starrräder vorgegeben werden. Das zumindest eine Stützrad kann antriebslos und um die Schwenkachse frei drehbar sein. Weitere Antriebskonzepte sind ebenso denkbar und möglich. Beispielsweise können bei dem vierrädrigen Fahrwerk die beiden Starrräder und eines der beiden Stützräder antriebslos und das andere Stützrad, insbesondere das vorlaufende Stützrad, angetrieben sein. Beim dreirädrigen Fahrwerk können die beiden Starrräder antriebslos und das einzige Stützrad angetrieben sein, oder umgekehrt. Dabei können die beiden Starrräder in Bezug auf die Längsrichtung außermittig, d. h. weiter vorne oder weiter hinten, am Fahrzeugkörper angeordnet sein. Das einzige Stützrad kann entsprechend vor- oder nachlaufend, d.h. in der Längsrichtung vor bzw. hinter den Starrrädern angeordnet sein.

Die Antriebseinheit kann je angetriebenem Laufrad einen Elektromotor aufweisen. Insbesondere können die Elektromotoren Radnabenmotoren sein. Diese zeichnen sich durch deren geringe Baugröße aus und bieten ausreichend Antriebskraft und Traglast für die Anwendung in dem Fahrzeug. Die Radnabenmotoren können jeweils mit einem ein- oder zweistufigen Getriebe ausgestattet sein. Insbesondere weist der jeweilige Radnabenmotor ein Gehäuse auf, in dem der Motor sowie weitere optionale Bauteile, wie das Getriebe, eine Abtriebswelle samt Lagerung angeordnet sein können. Die Radnabenmotoren können in den Starrrädern integriert sein. Die Radnabenmotoren können am Fahrzeugkörper abgestützt sein.

Vorzugsweise ist die Antriebseinheit mit den beiden Starrrädern antriebsverbunden. Durch Veränderung des Drehzahlverhältnisses zwischen den beiden Elektromotoren und/oder deren Drehsinn (gleichläufig, gegenläufig) kann das Fahrzeug gelenkt werden. Vorzugsweise sind die beiden Elektromotoren mit je einem Servo-Umrichter verbunden, der den jeweiligen Elektromotor mit dem für die Bewegung erforderlichen Strom versorgt. Bei gegenläufiger Ansteuerung kann das Fahrzeug auf der Stelle drehen. Insbesondere kann statt einzelner Servo-Umrichter bei zwei angetriebenen Laufrädern auch ein Doppelumrichter bzw. bei drei angetriebenen Laufrädern ein Mehrfachumrichter vorgesehen sein. Statt des Servo-Umrichters kann auch ein Frequenzumrichter oder andere Mittel zur Erzielung der vorgegebenen Drehzahl eingesetzt werden, solange jeder Elektromotor individuell eine Drehzahlvorgabe und Drehzahlansteuerung erhält. Von Vorteil ist weiterhin, dass das Fahrzeug ohne zusätzliche Getriebe auskommt, wodurch dieses kostengünstiger und wartungsfreundlicher ist. Weiterhin steht der eingesparte Bauraum zwischen den Starrrädern als Funktionsabschnitt zur Verfügung, an dem Komponenten des Bordnetzes angeordnet sein können. Statt der vorteilhaften Ausgestaltung mit zwei Elektromotoren kann die Antriebseinheit auch einen Elektromotor mit Getriebe aufweisen, um die Starrräder anzutreiben.

In bevorzugter Weise kann das Bordnetz eine Leseeinheit aufweisen, die zum Erfassen von am Untergrund angeordneten Leitelementen konfiguriert ist. Mittels der Leitelemente können Fahrwege zwischen den Textilmaschinen fest vorgegeben werden. Die Leseeinheit kann an dem Funktionsabschnitt des Fahrzeugkörpers angeordnet sein, der in der Querrichtung des Fahrzeugs zwischen zwei der in der Querrichtung voneinander beabstandeten Laufrädern, insbesondere der beiden Starrrädern ausgebildet ist. Dadurch wird weitestgehend vermieden, dass zumindest eine Teilmenge der Laufräder, insbesondere die Starrräder über die auf dem Untergrund angeordneten Leitelemente rollen, wodurch diese vor übermäßiger Abnutzung geschont werden. Vorzugsweise ist auch das zumindest eine Stützrad bzw. sämtliche der Stützräder außerhalb des Funktionsabschnitts angeordnet. Damit ist der Funktionsabschnitt insgesamt laufradfrei ausgebildet. Durch die Koppelung der Leseeinheit mit der Steuerungseinheit verfügt das Fahrzeug über eine kostengünstige, jedoch ausreichende Bordintelligenz zum automatisierten Betreiben des Fahrzeugs. Die von der Leseeinheit erfassten Informationen können an die Steuerungseinheit übermittelt werden, um das Fahrzeug durch Steuern der Antriebseinheit entlang der stationär angeordneten Leitelementen zu bewegen. Dadurch kann das Fahrzeug auf kostengünstige und ausfallsichere Weise den vorgegebenen Fahrwegen folgen, die zwischen den Textilmaschinen und darüber hinaus beispielsweise zu Parkflächen, Ladestationen zum Aufladen des Energiespeichers, etc. vorgegeben sein können.

Vorzugsweise umfasst die Leseeinheit eine Magnetbandlesevorrichtung, die zum insbesondere berührungslosen Erfassen des Verlaufs von als Magnetbänder gestalteten Leitelementen konfiguriert ist. Damit kann das Fahrzeug auf einfache und kostengünstige Weise geleitet werden. Grundsätzlich denkbar und möglich ist auch, dass die Magnetbandlesevorrichtung, die auch als Magnetscanner bezeichnet werden kann, zum Erfassen einzelner Magnetpunkte, die beispielsweise rasterförmig oder in Form einer gepunkteten Linie in einem bestimmten Abstand am Untergrund angeordnet sind, konfiguriert ist. Gegenüber den aus dem Stand der Technik bekannten Induktionsschleifen bieten magnetische Leitelemente den Vorteil, dass diese ohne Stromquelle auskommen. Zudem hat sich gezeigt, dass mittels der Magnetbänder das Fahrzeug auch über einen metallischen Untergrund, wie beispielsweise eine Rampe mit Metallschienen, geleitet werden kann. Alternativ sind grundsätzlich auch optische Lösungen, bei denen die Leseeinheit einen optischen Scanner aufweist, denkbar, allerdings sind diese verschmutzungsanfällig und aufgrund der Staubbelastung in einer Spinnerei zum Leiten des Fahrzeugs allenfalls begrenzt geeignet. Andere gängige Sensoren, wie Infrarot- oder Ultraschallsensoren, sind zwar denkbar und möglich, aber mitunter zu kostenintensiv und komplex in deren Umsetzung.

Die Magnetbandlesevorrichtung, die auch für magnetische Rasterpunkte konfiguriert sein kann, ist vorzugsweise an einem in Hauptfahrtrichtung (Vorwärtsfahrt) über den Untergrund vorderen Ende des Fahrzeugkörpers angeordnet. Insbesondere ist die Magnetbandlesevorrichtung an einem vom Hinterabschnitt abgewandten Ende des Vorderabschnitts angeordnet. Die Magnetbandlesevorrichtung kann eine Breite, respektive Erstreckung in der Querrichtung des Fahrzeugs haben, die vorzugsweise zwischen 50 Millimeter und 200 Millimeter betragen kann. Damit kann die Magnetbandlesevorrichtung mehrere insbesondere in der Querrichtung nebeneinander angeordnete Sensoren aufweisen, wodurch das Fahrzeug auch kurvig verlegten Magnetbändern präzise folgen kann. Ein Erfassungsbereich von Sensoren der Magnetbandlesevorrichtung hin zum Untergrund gerichtet sein kann. Der Erfassungsbereich der Magnetbandlesevorrichtung kann sich zum Untergrund hin trichterförmig aufweiten, sodass der auf dem Boden erfassbare Bereich größer als die Erstreckung der Magnetbandlesevorrichtung sein kann. Der Abstand des Magnetbandlesevorrichtung gegenüber dem Untergrund, bzw. einer von den Starrrädern aufgespannten Radaufstandsebene kann zwischen 20 Millimeter und 50 Millimeter betragen. Dies gewährleistet ausreichend Bodenfreiheit, damit das Fahrzeug sicher und störungsfrei über den Untergrund fahren kann, und ermöglicht ein präzises Leiten des Fahrzeugs entlang der Magnetbänder. Die Magnetbandlesevorrichtung kann als Gerät mit einem analogen Ausgangssignal oder als Gerät mit digitalem Ausgangssignal bereitgestellt sein. Die digitale Ausführung ist gegenüber der analogen Ausführung preiswerter und es hat sich gezeigt, dass die Mittenabweichung zum Magnetband zwar nur diskret-digital in Schritten angegeben wird, dies jedoch zum Leiten des selbstfahrenden Fahrzeugs ausreichend ist. Bei der analogen Ausführung wäre die Ausgangsspannung proportional zur Mittenabweichung.

Weiterhin kann die Leseeinheit eine RFID-Tag-Lesevorrichtung umfassen, die zum Auslesen von Informationen von als RFID-Tag gestalteten Leitelementen konfiguriert ist. Dadurch kann das Fahrzeug auf einfache und kostengünstige Weise geleitet werden. "Radio Frequency Identification" Technologie - kurz RFID - erlaubt die kontaktlose Übertragung von auf den RFID-Tags, bzw. Transpondern gespeicherten Daten. Mittels der RFID-Tag-Lesevorrichtung, die auch als RFID-Lesegerät bezeichnet werden kann, können beispielsweise Adressinformationen aus den RFID-Tags ausgelesen und an die Steuerungseinheit übermittelt werden. Die RFID-Tag-Lesevorrichtung kann an einer Unterseite des Grundkörpers angeordnet sein, um diese möglichst nah über dem Untergrund zu halten. Des Weiteren kann in der Längsrichtung des Fahrzeuges die RFID-Tag-Lesevorrichtung zumindest in etwa mittig zwischen dem vorderen Ende und dem hinteren Ende des Fahrzeugkörpers und weiter bevorzugt im Bereich der bzw. um die Gierachse angeordnet sein. Damit kann sich das Fahrzeug auf dem RFID-Tag auf der Stelle drehen, ohne dass die RFID-Tag-Lesevorrichtung den Kontakt zum RFID-Tag verliert.

Vorzugsweise umfasst die Leseeinheit die Magnetbandlesevorrichtung und die RFID-Tag-Lesevorrichtung. Beispielsweise können die RFID-Tags an Knotenpunkten, an denen sich mehrere der Magnetbänder kreuzen, angeordnet sein. Damit erkennt die Steuerungseinheit auf kostengünstige Weise einen Knotenpunkt. Somit kann sie das Fahrzeug am Knotenpunkt beispielsweise Abbiegen oder Geradeausfahren lassen. Auch zwischen den Knotenpunkten können RFID-Tags vorgesehen sein, um das Erreichen bzw. Überfahren definierter Zwischenpunkte zu erkennen.

In vorteilhafter Ausgestaltung umfasst die Steuerungseinheit ein Speichermedium, auf dem ein Anwendungsprogramm oder dergleichen abgespeichert sein können. Auf diese Weise können Steuerbefehle hinterlegt sein, die das Fahrzeug beim Erkennen der Leitelemente durchführt. Damit kann das Fahrzeug zum Beispiel vorprogrammierte Wege entlang der Leitelemente abfahren, um den zu transportierenden Aufnahmebehälter von einer faserbandabliefernden Textilmaschine zur faserbandgespeisten Textilmaschine zu transportieren, und umgekehrt.

Weiterhin kann das Fahrzeug über eine Empfangseinheit verfügen, um von einer übergeordneten Leitsteuerung Steuerbefehle zu erhalten. Die Leitsteuerung kann die Fahrzeugsteuerung für eine Vielzahl der Fahrzeuge innerhalb der Spinnerei übernehmen. Eine solche Leitsteuerung kann grundsätzlich auch mit den Textilmaschinen gekoppelt sein, um die Fahrzeuge bedarfsgerecht einsetzen zu können. Beispielsweise kann die Leitsteuerung das Fahrzeug an den Knotenpunkten, die das Fahrzeug durch Auslesen der RFID-Tags erkennt, zum Abbiegen oder zur Geradeausfahrt auffordern. Weiterhin kann das Fahrzeug eine Sendeeinheit aufweisen, um Informationen an die übergeordnete Leitsteuerung zu übermitteln. Die Informationen können zum Beispiel Positionsdaten des Fahrzeugs beinhalten. Dabei müssen die Positionsdaten keine Echtzeitdaten sein. Vielmehr kann es für eine kostengünstige Ausführung ausreichend sein, wenn beim Überfahren des RFID-Tags die ausgelesenen Adressdaten an die Leitsteuerung übermittelt werden. Weitere Informationen können die Fahrgeschwindigkeit, den Zustand des Energiespeichers, das Verlassen des Magnetstreifens, die Registrierung einer Übertemperatur, Fehler in den einzelnen Steuerungs- und Antriebselementen, Stromaufnahme der Elektromotoren und darüber Drehmoment zum Feststellen von Schleifblockade, aufgebaute Verbindung zu Ladekontakten etc. umfassen. Zur Überwachung des Zustands des Energiespeichers kann das Bordnetz ein Batteriemanagementsystem umfassen, sodass Informationen über den Ladezustand bzw. den Fortschritt beim Laden des Energiespeichers, den Integritätszustand, die Temperatur des Akkumulators, die aktuelle Entladeleistung, die aktuelle Ladeleistung, Fehler, etc. verfügbar sein können. Vorzugsweise umfasst das Fahrzeug ein Funkmodul, insbesondere ein WLAN-Gerät, in dem die Empfangseinheit und die Sendeeinheit zusammengefasst sein können oder zumindest eine Funkantenne dafür.

In vorteilhafter Weise ist auch das Bordnetz im montierten Zustand vom Aufnahmebehälter überdeckt, wobei bei technischen Vorgaben einzelne Komponenten auch außerhalb des vom Aufnahmebehälters überdeckten Bereichs angeordnet sein können. Beispielsweise kann eine solche Komponente das Funkmodul sein, um die Qualität der Funkverbindung zur übergeordneten Leitsteuerung zu verbessern. Weiterhin kann eine solche Komponente eine Ladeschnittstelle zum Laden des Energiespeichers sein, die von außen zugänglich sein muss, um ein automatisches Andocken des Fahrzeugs an eine externe Ladestation zu vereinfachen. Die Ladeschnittstelle könnte aber auch im vom Aufnahmebehälter überdeckten Bereich und insbesondere auf der Unterseite des Fahrzeugs angeordnet sein. Dann könnte das Fahrzeug zum Laden die Anschlusskontakte der Ladeschnittstelle "überfahren". Weiterhin kann das Bordnetz eine Sicherheitseinrichtung zur Stoßerkennung aufweisen, bei der einzelne Komponenten außerhalb des überdeckten Bereichs liegen, um den Zusammenprall mit einem Hindernis zu erkennen. Zum Beispiel kann eine Berührungssensorik in einem am Aufnahmebehälter oder am Fahrzeug angeordneten Stoßfänger integriert sein, die mit der Steuerungseinheit verbunden ist. Dadurch kann die Steuerungseinheit das Fahrzeug bei Stoßerkennung stoppen und ggf. das Auslösen der Sicherheitseinrichtung an die übergeordnete Leitsteuerung melden.

Um das Bordnetz vor äußeren Einflüssen zu schützen, kann es an einer von der Transportfläche abgewandten Unterseite des Fahrzeugkörpers angeordnet sein. Des Weiteren können die im montierten Zustand vom Aufnahmebehälter überdeckten Bauteile des Fahrzeugs an der Unterseite der Grundplatte angeordnet sein. Weiterhin kann eine am Fahrzeugkörper angeordnete Unterbodenverkleidung das Bordnetz von unten schützen. Vorzugsweise sind diejenigen Komponenten, die im montierten Zustand außerhalb des Aufnahmebehälters liegen bzw. diesen seitlich überragen, in und/oder an einem vom Fahrwerk getragenen Elektrogehäuse angeordnet. In dem Elektrogehäuse kann die Ladeschnittstelle von außen zugänglich angeordnet sein. Weiterhin kann an dem Elektrogehäuse ein Ein/Aus-Schalter vorgesehen sein, der somit von außen zugänglich ist, um die elektrische Stromversorgung des Bordnetzes manuell unterbrechen zu können.

Eine weitere Lösung der oben genannten Aufgabe besteht in einer Kannenvorrichtung mit einem Aufnahmebehälter für ein Faserband zum Transportieren des Aufnahmebehälters zwischen faserbandabliefernden und faserbandgespeisten Textilmaschinen über einen Untergrund. Die Kannenvorrichtung umfasst das vorbeschriebene selbstfahrende Fahrzeug, wobei der Aufnahmebehälter mit der Transportfläche des selbstfahrenden Fahrzeugs in Anlage und am Fahrzeugkörper befestigt ist. Der Aufnahmebehälter überdeckt das Fahrwerk, die elektrische Antriebseinheit und die Transportfläche vollständig. Durch die erfindungsgemäße Kannenvorrichtung ergeben sich dieselben Vorteile, wie sie im Zusammenhang mit dem erfindungsgemäßen Fahrzeug beschrieben worden sind, sodass hier abkürzend auf obige Beschreibung Bezug genommen wird. Dabei versteht es sich, dass alle genannten Ausgestaltungen des Fahrzeugs auf die Kannenvorrichtung übertragbar sind und umgekehrt.

Die Kannenvorrichtung ist modular aufgebaut und umfasst als Module das selbstfahrende Fahrzeug und den Aufnahmebehälter. Durch den modularen Aufbau können die Herstellungskosten gesenkt werden, da das Fahrzeug und der Aufnahmebehälter getrennt voneinander und sogar von unterschiedlichen Herstellern hergestellt werden können. Das Fahrzeug ist mit dem einen Aufnahmebehälter "verheiratet" und bleibt mit diesem auf Dauer verbunden (= montierter Zustand). Vorzugsweise ist nur bei Defekt des Fahrzeugs oder zu Wartungszwecken eine Trennung notwendig. Das Befestigen des Aufnahmebehälters auf dem Fahrzeug ist ein bevorzugt händisch durchzuführender Montageschritt.

Die Stellfläche des Aufnahmebehälters kann durch die sich in Umfangsrichtung um die Behälterachse erstreckende Seitenwand vorgegeben sein. Die Stellfläche kann der Querschnittsfläche des Aufnahmebehälters entsprechen. Dadurch, dass sich der Flächenbedarf des Fahrzeugs zumindest im Wesentlichen auf die Größe der Stellfläche des Aufnahmebehälters beschränkt, die Kannenvorrichtung äußerlich weitestgehend einer herkömmlichen Spinnereikanne, an deren Unterseite Rollen befestigt sind (auch "Standardkanne" genannt), entsprechen. In bevorzugter Weise hat die Kannenvorrichtung die Abmessungen der zu ersetzenden Standardkanne. Die Kannenvorrichtung kann somit, wie eine Standardkanne, in die Arbeitsbereiche der Textilmaschinen, wie Füllplätze an einem Kannenwechsler oder dergleichen, hineinfahren und somit auch in den Arbeitsbereichen zur Ausführung von Bewegungen genutzt werden kann. Anpassungen an den Textilmaschinen durch den Wechsel von der Standardkanne zur selbstfahrenden Kannenvorrichtung sind somit nicht notwendig.

Der Aufnahmebehälter ist in Anlage mit der Transportfläche des Fahrzeugs, die maximal gleich großer oder vorzugsweise kleiner als die Stellfläche des Aufnahmebehälters ist. Die Transportfläche kann senkrecht zur Hochachse, radial zur Hochachse und/oder schräg, respektive konisch verlaufend gestaltet sein. In bevorzugter Weise weist der Aufnahmebehälter eine ortsfeste Stützstruktur auf, die mit der Transportfläche in Anlage ist. Die Stützstruktur kann innenliegend sein, d. h. innerhalb des von der Seitenwand des Aufnahmebehälters umschlossenen Innenraums, und kann gegenüber einer Unterkante des Aufnahmebehälters zurückgesetzt sein, d. h. hin zu einer oberen Füllöffnung des Aufnahmebehälters. Die Stützstruktur kann einen ortsfesten Behälterboden umfassen, der den Innenraum des Aufnahmebehälters in einen nach oben hin offenen Füllraum zum Aufnehmen des Faserbands und in einen nach unten hin offenen Technikraum, in dem das Fahrzeug eingesetzt ist, unterteilt. In dem Füllraum kann in an sich bekannter Weise ein insbesondere federbelasteter Teller angeordnet sein, der aufgrund des Gewichts der beim Ablegen anwachsenden Faserbandsäule hin zum Behälterboden absinken kann. Die Unterseite des Behälterbodens kann bei der Kannenvorrichtung mit der Transportfläche insbesondere unmittelbar in Anlage sein. Insbesondere kann der Aufnahmebehälter über den Behälterboden auf der Transportfläche abgestützt sein. Die Stützstruktur kann auch eine oder mehrere Streben, Stützen, einen Rand oder dergleichen aufweisen und kann eine balken-, netz-, oder ringförmige Stützfläche ausbilden. Vor allem bei der radial zur Hochachse ausgerichteten Transportfläche kann der Aufnahmebehälter mit seiner Innenwand mit der Transportfläche in Anlage sein und mittels der Befestigungsmittel gegen die Transportfläche gespannt sein, sodass es keiner weiteren Stützstruktur bedarf. Allerdings kann die Stützstruktur beispielsweise einen ringförmigen Steg im Inneren des Aufnahmebehälters umfassen, der sich an einem horizontalen Abschnitt der Transportfläche abstützt, um Gewichtskräfte besser aufnehmen zu können. Die Stützstruktur muss somit keine staubdichte Trennung zwischen dem Füllraum und dem Technikraum bereitstellen. Vielmehr kann es von Vorteil sein, wenn sich im Füllraum ansammelnde kleinere Bandreststücke oder sonstiger Schmutz nach unten durch den Technikraum rausfallen und auf den Untergrund rieseln kann. Wenn die Stützstruktur den Behälterboden umfasst, der grundsätzlich als Scheibe gebildet sein kann, kann der Behälterboden zumindest ein Loch und weiter bevorzugt mehrere außermittig liegende Löcher aufweisen. Die Löcher im Behälterboden oder Aussparungen in der Stützstruktur können derart platziert sein, dass der Schmutz im radial äußeren Randbereich des Fahrzeugs und bevorzugt außerhalb des Funktionsabschnitts und insbesondere am Bordnetz vorbei rausfällt. Beispielsweise kann der Schmutz im Schwenkbereich der Stützräder rausgeleitet werden. Grundsätzlich denkbar ist aber auch die möglichst staubdichte Trennung des Füllraums vom Technikraum, um das Fahrzeug von Faserbandresten möglichst fernzuhalten. Statt des ortsfesten Behälterbodens, der üblicherweise bei Rundkannen verwendet wird, kann der Aufnahmebehälter auch einen höhenverstellbaren Füllboden, der häufig bei Rechteckkannen eingesetzt wird, und die Stützstruktur haben. Die Grundplatte kann an den Querschnitt des Innenraums der Rechteckkanne angepasst sein. Wenn der Aufnahmebehälter die Form einer "Rechteckkanne" hat, kann zum Abführen des aus dem Füllraum rausfallenden Schmutzes eine Vorrichtung vorgesehen sein, die unterhalb des bewegbaren Bodens angeordnet ist und den Schmutz seitlich in den äußeren Randbereich leitet, von wo aus er dann auf den Untergrund rieseln kann.

Insbesondere können der Aufnahmebehälter und das Fahrzeug mittels Befestigungsmittel miteinander verbunden sein, wobei die Befestigungsmittel die fahrzeugseitigen Befestigungselemente und die behälterseitigen Befestigungselemente umfassen. Gemäß einer ersten Ausgestaltung können die Befestigungsmittel vollständig vom Aufnahmebehälter überdeckt sein und in weiterer Ausbildung vollständig im Technikraum angeordnet sein. Damit sind sie im Betrieb der selbstfahrenden Kannenvorrichtung von außen nicht zugänglich, wie bei einer Blindbefestigung, es sei denn, die Kannenvorrichtung wird "auf den Kopf" gestellt. Die behälterseitigen Befestigungselemente, zum Beispiel Bolzen, Gewindestifte oder dergleichen, können an der Unterseite der Stützstruktur angeordnet, insbesondere angeformt sein. Diese können in die fahrzeugseitigen Befestigungselemente, beispielsweise Durchgangsbohrungen eingesetzt und anschließend gesichert werden können. Vorzugsweise sind Muttern vorgesehen, die auf die behälterseitigen Befestigungselemente aufgeschraubt werden, um die Stützstruktur und den Fahrzeugkörper, beispielsweise dessen Grundplatte gegeneinander zu verspannen. Weiterhin können die behälterseitigen Befestigungselemente parallel zur Behälterachse des Aufnahmebehälters in den Technikraum hineinragen. Gemäß einer zweiten Ausgestaltung, die zusätzlich oder alternativ zur ersten Ausgestaltung gelten kann, können die fahrzeugseitigen Befestigungsmittel am Fahrzeugkörper radial zur Hochachse abragen. Dies können zum Beispiel Stege, Bolzen, Gewindestifte oder dergleichen sein, die durch Aussparungen in der Seitenwand des Aufnahmebehälters ragen. Mittels Muttern kann die Seitenwand und die Transportfläche gegeneinander verspannt sein. Für die Ausgestaltungen gilt gleichermaßen, dass im montierten Zustand die Behälterachse des Aufnahmebehälters mit der Hochachse bzw. der Gierachse des Fahrzeugs zusammenfallen kann.

In bevorzugter Weise ist das Fahrzeug zumindest im Wesentlichen im Technikraum untergebracht. Zumindest im Wesentlichen soll umfassen, dass zum einen, wie vorstehend beschrieben, einzelne Komponenten seitlich über den Aufnahmebehälter vorstehen können, und zum anderen die Laufräder an der Unterseite des Aufnahmebehälters vorstehen, um für eine ausreichende Bodenfreiheit zu sorgen. Das Fahrzeug kann eine Bauhöhe von mindestens 50 Millimeter und von maximal 260 Millimeter aufweisen. Die Bauhöhe kann durch den Abstand zwischen der Radaufstandsebene und der durch die Transportfläche aufgespannten Stützebene bestimmt sein. Im montierten Zustand kann das Fahrzeug mindestens 10 Millimeter und maximal 40 Millimeter über der Unterseite des Aufnahmebehälters überstehen. Der Technikraum kann eine Tiefe, respektive Erstreckung in der Hochrichtung von mindestens 60 Millimeter und maximal 220 Millimeter aufweisen. Damit ist der Technikraum zum einen ausreichend tief, um das Fahrzeug aufnehmen zu können. Zum anderen wird das Füllvolumen des Aufnahmebehälters nur geringfügig verringert. Somit kann die Höhe der selbstfahrenden Kannenvorrichtung der Höhe einer Standardkanne entsprechen, sodass die Kannenvorrichtung ohne betriebliche Anpassungen an den Textilmaschinen verwendet werden kann. Alternativ kann die Stützstruktur, insbesondere der Behälterboden auch bündig mit der Unterseite des Aufnahmebehälters abschließen, wie bei einer Hülse. Dadurch ist der Aufnahmebehälter kostengünstiger herzustellen. Da es dann über keinen Technikraum verfügt, kann zum Schutz des Fahrzeuges ein umlaufender Kragen seitlich am Fahrzeugkörper angeordnet sein, der im montierten Zustand mit der Seitenwand des Aufnahmebehälters bündig sein kann.

Bevorzugte Ausführungsformen werden nachstehend anhand der Zeichnungsfiguren erläutert. Hierin zeigt:
- Figur 1: eine Vorderansicht einer auf einem Untergrund aufgestellten Kannenvorrichtung gemäß einer ersten Ausführungsform der vorliegenden Erfindung, wobei die Kannenvorrichtung modular aufgebaut ist und einen erfindungsgemäßen Aufnahmebehälter und ein erfindungsgemäßes Fahrzeug zum Transportieren des Aufnahmebehälters über den Untergrund aufweist;
- Figur 2: eine Rückansicht der Kannenvorrichtung aus Figur 1;
- Figur 3: eine vereinfachte Schnittansicht der Kannenvorrichtung aus Figur 1;
- Figur 4: eine Schnittansicht des Aufnahmebehälters aus Figur 1;
- Figur 5: eine Unteransicht des Aufnahmebehälters aus Figur 1;
- Figur 6: eine Draufsicht des Fahrzeugs aus Figur 1, wobei lediglich zur Verdeutlichung der Größenverhältnisse ein Boden des Aufnahmebehälters in gepunkteter Linie dargestellt ist;
- Figur 7: eine Unteransicht des Fahrzeugs aus Figur 1, wobei lediglich zur Verdeutlichung der Größenverhältnisse ein Boden des Aufnahmebehälters mit gepunkteter Linie dargestellt ist;
- Figur 8: eine Querschnittsansicht des Fahrzeugs aus Figur 1, wobei das Fahrzeug auf dem Untergrund dargestellt ist;
- Figur 9: eine schematische Darstellung eines Bordnetzes des Fahrzeugs aus Figur 1;
- Figur 10: die Kannenvorrichtung aus Figur 1 in Unteransicht, die sich auf einem geraden Fahrwegabschnitt befindet, der mit gestrichelten Linien dargestellt ist;
- Figur 11: die Kannenvorrichtung aus Figur 10, die sich auf dem geraden Fahrwegabschnitt kurz vor einem gebogenen Fahrwegabschnitt befindet;
- Figur 12: die Kannenvorrichtung aus Figur 11, die sich auf dem gebogenen Fahrwegabschnitt befindet;
- Figur 13: die Kannenvorrichtung aus Figur 1 in Unteransicht, die sich auf einem geraden Fahrwegabschnitt kurz vor einem Knotenpunkt des Fahrwegs befindet, der mit gestrichelten Linien dargestellt ist;
- Figur 14: die Kannenvorrichtung aus Figur 13, die sich über dem Knotenpunkt in einer Rechtsdrehung befindet;
- Figur 15: die Kannenvorrichtung aus Figur 14 nach der 90 Grad-Rechtsdrehung über dem Knotenpunkt;
- Figur 16: eine Querschnittsansicht einer Kannenvorrichtung gemäß einer zweiten Ausführungsform der vorliegenden Erfindung, wobei die Kannenvorrichtung modular aufgebaut ist und einen weiteres erfindungsgemäßen Aufnahmebehälter und ein weiteres erfindungsgemäßes Fahrzeug zum Transportieren des Aufnahmebehälters über den Untergrund aufweist;
- Figur 17: eine Schnittansicht des Aufnahmebehälters aus Figur 16;
- Figur 18: eine Unteransicht des Aufnahmebehälters aus Figur 16; und
- Figur 19: eine vereinfachte Schnittansicht einer Kannenvorrichtung gemäß einer dritten Ausführungsform der vorliegenden Erfindung, wobei die Kannenvorrichtung modular aufgebaut ist und einen noch weiteren erfindungsgemäßen Aufnahmebehälter und ein noch weiteres erfindungsgemäßes Fahrzeug zum Transportieren des Aufnahmebehälters über den Untergrund aufweist.

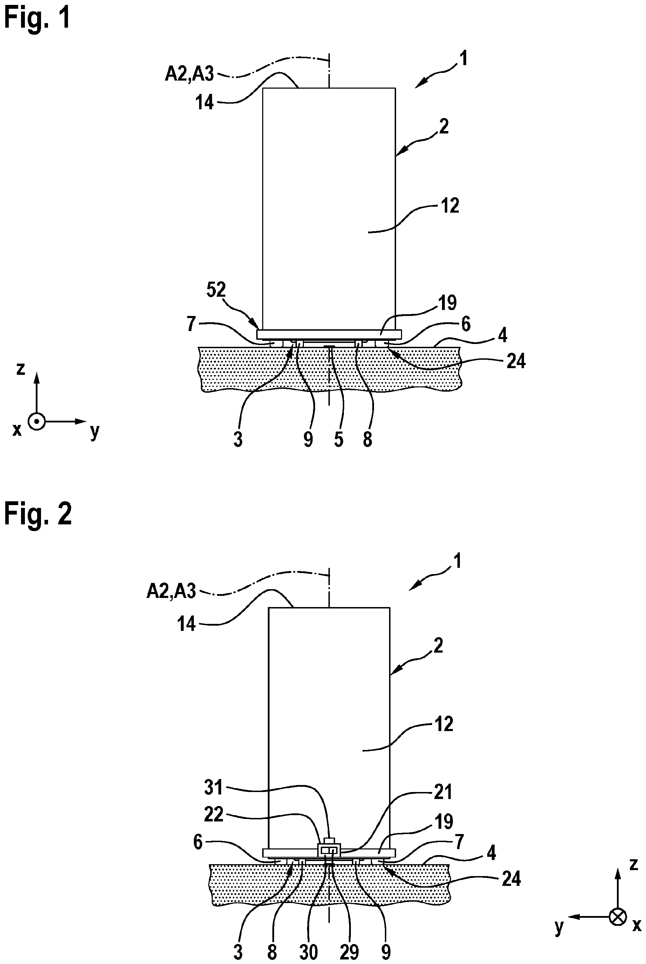

In den Figuren 1 bis 3 ist eine Kannenvorrichtung 1 gemäß einer Ausführungsform der vorliegenden Erfindung dargestellt. Die Kannenvorrichtung 1, die auch als selbstfahrende Kanne bezeichnet werden kann, ist modular aufgebaut und weist als erstes Modul einen erfindungsgemäßen Aufnahmebehälter 2 für ein Faserband und als zweites Modul ein erfindungsgemäßes selbstfahrendes Fahrzeug 3 zum Transportieren des Aufnahmebehälters 2 über einen Untergrund 4 auf.

Im Betrieb fährt die Kannenvorrichtung 1 zwischen Textilmaschinen (nicht gezeigt) auf dem Untergrund 4 hin und her, um Faserbänder von faserbandabliefernden Textilmaschinen zu faserbandgespeisten Textilmaschinen zu transportieren. Hierzu kann das Fahrzeug 3 am Untergrund 4 angeordneten Leitelementen 5 folgen, die Fahrwege in der Spinnerei vorgeben. Die Leitelemente 5 können, wie in den Figuren 1 bis 3 gezeigt, auf der Oberfläche des Untergrunds 4 aufgebracht, insbesondere aufgeklebt oder im Untergrund 4 eingelassen sein. Zum Beispiel können Schlitze und/oder andersförmige Ausnehmungen im Untergrund 4 ausgebildet sein, in die die Leitelemente 5 eingelegt und anschließend mit Epoxidharz oder dergleichen übergossen sein können.

In den Figuren 1 bis 3 sind zur Verdeutlichung der Ausrichtung der Kannenvorrichtung 1 im Raum eine Längsrichtung X, eine Querrichtung Y und eine Hochrichtung Z eingezeichnet, die im Sinne eines der Kannenvorrichtung 1 zugeordneten kartesischen Koordinatensystems definiert und durch entsprechende Pfeile angegeben sind. Die Hochrichtung Z steht normal auf einer von dem Untergrund 4 aufgespannten Bodenebene. Begriffe wie "unten", "unterhalb", "oben" oder "oberhalb" stellen dabei räumliche Angaben in Bezug auf die auf dem Untergrund 4 aufgestellte Kannenvorrichtung 1 dar.

Das Fahrzeug 3 ist von unten in den Aufnahmebehälter 2 eingesetzt, wobei dessen Laufräder 6, 7, 8, 9 an einer Behälterunterseite 10 des Aufnahmebehälters 2 vorstehen. Für eine ausreichende Bodenfreiheit beträgt ein Abstand S2 des Aufnahmebehälters 2 zum Untergrund 4 zwischen 10 Millimeter und 50 Millimeter, wobei besonders gute Ergebnisse mit einem Abstand S2 von etwa 20 Millimeter erzielt wurden.

Der Aufnahmebehälter 2 ist grundsätzlich lösbar, aber auf Dauer mit dem Fahrzeug 3 verbunden. Dieser Zustand wird auch als "montierter Zustand" bezeichnet und ist in den Figuren 1 bis 3 gezeigt. Konkret sind Befestigungsmittel 11 vorgesehen, die von außen nicht zugänglich sind, es sei denn, die Kannenvorrichtung 1 wird "auf den Kopf" gestellt. Insofern können die Befestigungsmittel 11 auch als innenliegende Befestigungsmittel bezeichnet werden, die eine Blindbefestigung bereitstellen.

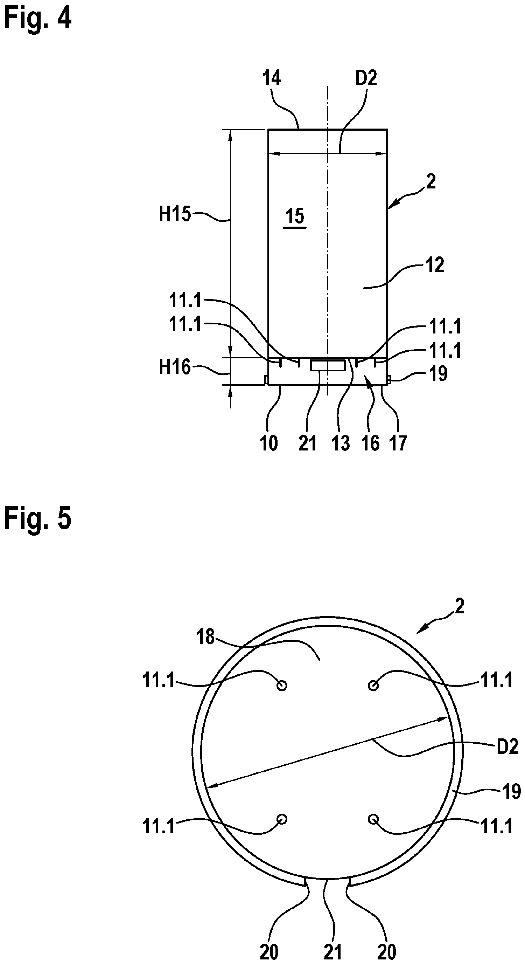

In den Figuren 4 und 5 ist der erfindungsgemäße Aufnahmebehälter 2 im Detail gezeigt. Dieser weist eine zylindrische Seitenwand 12 auf, die sich konzentrisch um eine entlang der Hochachse Z erstreckende Behälterachse A2 erstreckt. Ein Innendurchmesser D2 des von der Seitenwand 12 umschlossenen Innenraums beträgt mindestens 350 Millimeter und maximal 1200 Millimeter und weist, hier exemplarisch, 500 Millimeter auf. Weiterhin hat der Aufnahmebehälter 2 eine Stützstruktur 13, die hier als ortsfester Behälterboden in Form einer kreisförmigen Scheibe ausgebildet ist, dessen Außendurchmesser zumindest im Wesentlichen dem Innendurchmesser D2 entspricht. Die Stützstruktur 13, die im Weiteren auch als Behälterboden bezeichnet wird, ist zurückgesetzt angeordnet und mit der Seitenwand 12 fest verbunden. Zurückgesetzt angeordnet bedeutet hier, dass der Behälterboden 13 von der Behälterunterseite 10 weg hin zu einer mit einer Füllöffnung 14 versehenen Oberseite des Aufnahmebehälters 2 versetzt angeordnet ist. Damit unterteilt der Behälterboden 13 den Innenraum in einen nach oben hin offenen Füllraum 15 und einen nach unten hin offenen Technikraum 16. Über die Füllöffnung 14 kann, in an sich bekannter Weise, das Faserband in den Füllraum 15 eingefüllt und aus diesem wieder entnommen werden. In dem Füllraum kann beispielsweise ein, an sich bekannter, Teller (nicht gezeigt) angeordnet sein, der beispielsweise federbelastet sein kann und aufgrund des Gewichts der beim Ablegen anwachsenden Faserbandsäule hin zum Behälterboden 13 absinken kann. An der Behälterunterseite 10 ist eine Behälteröffnung 17 ausgebildet, die parallel zur Füllöffnung 14 ausgerichtet sein kann und über die das Fahrzeug 3 von unten in den Technikraum 16 einsetzbar ist. Ein Innendurchmesser der Behälteröffnung 17 kann dem Innendurchmesser D2 des Innenraums entsprechen, wobei dieser grundsätzlich auch kleiner sein kann, sofern das Fahrzeug 3 weiterhin in den Technikraum 16 einsetzbar ist.

Der Technikraum 16 hat eine Erstreckung H16 in der Hochrichtung Z von beispielsweise mindestens 50 Millimeter und maximal 260 Millimeter und weist, hier exemplarisch, 110 Millimeter auf. Der Füllraum 15 hat eine Erstreckung H15 in der Hochrichtung Z von beispielsweise mindestens 400 Millimeter und maximal 1500 Millimeter und weist, hier exemplarisch, 1200 Millimeter auf. Das Füllvolumen des Füllraums 15 beträgt, hier, somit etwa 339 Liter.

Im montierten Zustand stützt sich der Aufnahmebehälter 2 mit seinem Behälterboden 13 auf dem Fahrzeug 3 ab. Zum Befestigen des Aufnahmebehälters 2 am Fahrzeug 3 umfassen die Befestigungsmittel 11 behälterseitige Befestigungselemente 11.1, die zum Beispiel parallel zur Behälterachse A2 ausgerichtete Gewindebolzen und Muttern umfassen können. Die, hier exemplarisch vier, Befestigungselemente 11.1 können an einer dem Technikraum 16 zugewandten Bodenunterseite 18 des Behälterbodens 13 angeformt, insbesondere angeschweißt sein, wie in der Unteransicht gemäß Figur 5 erkennbar ist.

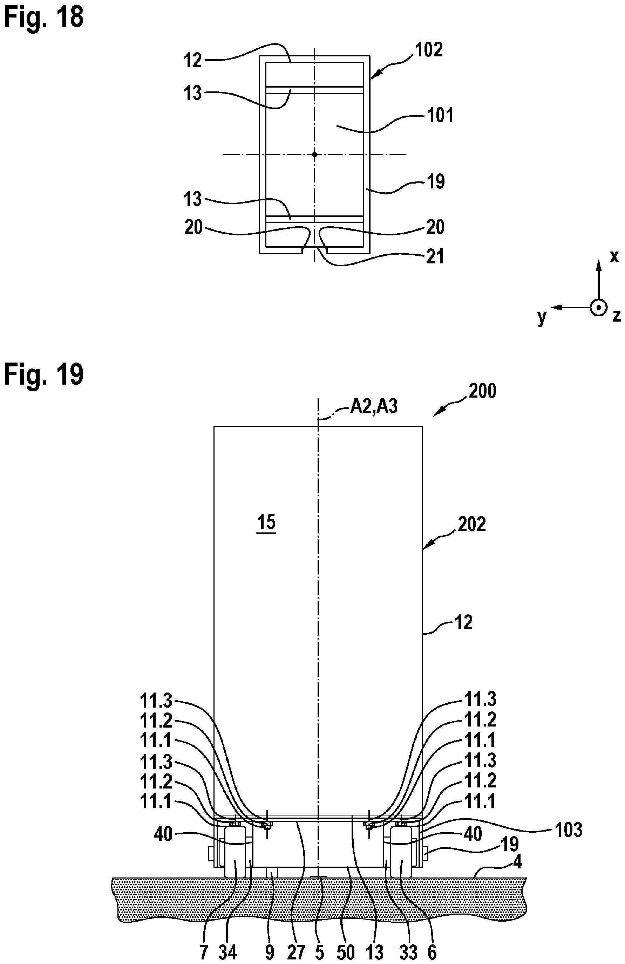

Weiterhin ist am Aufnahmebehälter 2 ein Stoßfänger 19 angeordnet. Dieser ist in Umfangsrichtung um die Behälterachse A2 an der Außenseite der Seitenwand 12 angeordnet. In der Figur 5 ist weiter erkennbar, dass der Stoßfänger 19 eine c-förmig offene Ringform mit zwei Ringenden 20 hat. In der Seitenwand 12 ist zwischen den beiden Ringenden 20 eine Wandöffnung 21 ausgebildet, die auf der Rückseite des Aufnahmebehälters 2 liegt. In der Figur 2 ist die Rückansicht der Kannenvorrichtung 1 gezeigt, aus der erkennbar ist, dass ein Elektrogehäuse 22 des Fahrzeugs 3 durch die Wandöffnung 21 greift und seitlich über den Stoßfänger 19 hinausragt. Alternativ kann der Stoßfänger 19 auch am Fahrzeug 3 angeordnet sein, wenn der Aufnahmebehälter 2 in Form einer Hülse gestaltet ist, bei der die Behälterunterseite 10 des Aufnahmebehälters 2 bündig mit dem Behälterboden 13 abschließt. Die alternative Ausführungsform ist in der Figur 19 gezeigt, auf die später näher eingegangen wird.

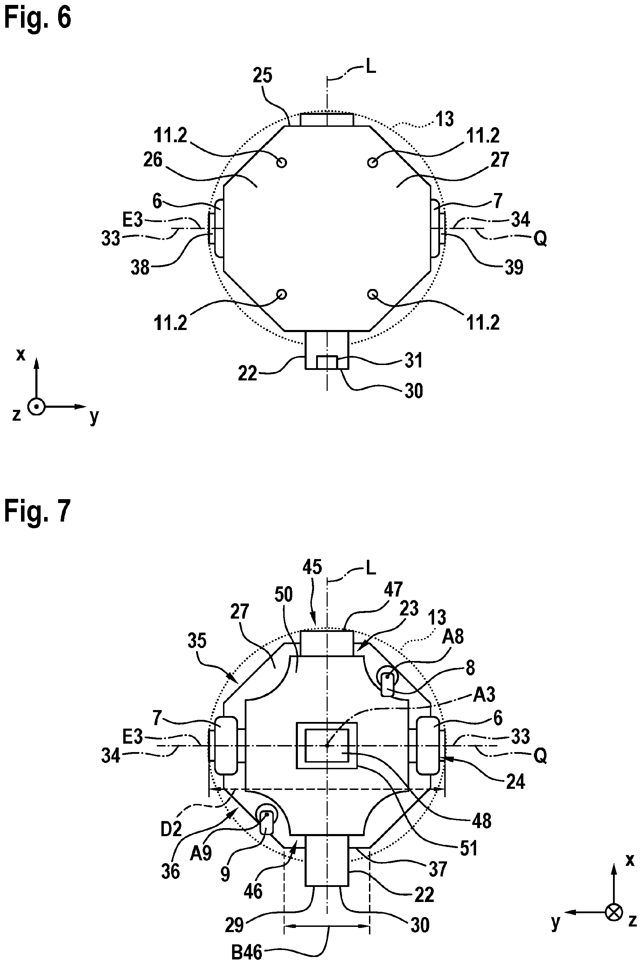

In den Figuren 6 bis 8 ist das erfindungsgemäße Fahrzeug 3 im Detail gezeigt, wobei in den Figuren 6 und 7 mit gestrichelten Linien die kreisförmige Kontur des Behälterbodens 13 eingezeichnet ist, lediglich um zu verdeutlichen, dass im montierten Zustand das Fahrzeug 3 im Wesentlichen vom Aufnahmebehälter 2, respektive dem Behälterboden 13 überdeckt ist. Erkennbar ist, dass lediglich das Elektrogehäuse 22 sowie einige in bzw. am Elektrogehäuse 22 angeordnete Komponenten eines Bordnetzes 23 des Fahrzeugs 3 außerhalb des überdeckten Bereichs liegen bzw. diesen überragen.

Konkret weist das Fahrzeug 3 ein Fahrwerk 24 mit den vier Laufrädern 6, 7, 8, 9, einen vom Fahrwerk 24 getragenen Fahrzeugkörper 25, eine Transportfläche 26, mit der der Behälterboden 13 des Aufnahmebehälters 2 in Anlage bringbar ist, und das am Fahrzeugkörper 25 angeordnete Bordnetz 23 auf. Im Weiteren weist der Fahrzeugkörper 25 eine starre Grundplatte 27 auf, wobei deren vom Fahrwerk 24 abgewandte Oberseite die Transportfläche 26 umfasst. Die Transportfläche 26 liegt in einer Stützebene E26, die parallel zur Längsrichtung X und zur Querrichtung Y ist und auf der eine Gierachse A3 des Fahrzeugs 3 normal steht. Die Gierachse A3 entspricht der Fahrzeughochachse. Es ist von Vorteil, wenn die Gierachse A3 durch den Schwerpunkt des Fahrzeugs 3 verläuft. Das Bordnetz 23 ist vollständig unterhalb der Stützebene E26 angeordnet.

Zum Befestigen des Aufnahmebehälters 2 auf dem Fahrzeug 3 umfassen die Befestigungsmittel 11 weiterhin fahrzeugseitige Befestigungselemente 11.2, die mit den behälterseitigen Befestigungselementen 11.1 derart zusammenwirken bzw. relativ zueinander ausgerichtet sind, dass im montierten Zustand eine Behälterachse A2 des Aufnahmebehälters 2 und die fahrzeugfeste Gierachse A3 des Fahrzeugs 3 zusammenfallen. Die fahrzeugseitigen Befestigungselemente 11.2 können Durchgangsbohrungen umfassen, in die die behälterseitigen Befestigungselemente 11.1, insbesondere die Gewindebolzen einsetzbar sind. Im montierten Zustand sind die Gewindebolzen in den Durchgangsbohrungen eingesetzt und Muttern von unten auf die Gewindebolzen aufgeschraubt, um den Behälterboden 13 und die Grundplatte 27 gegeneinander zu verspannen.

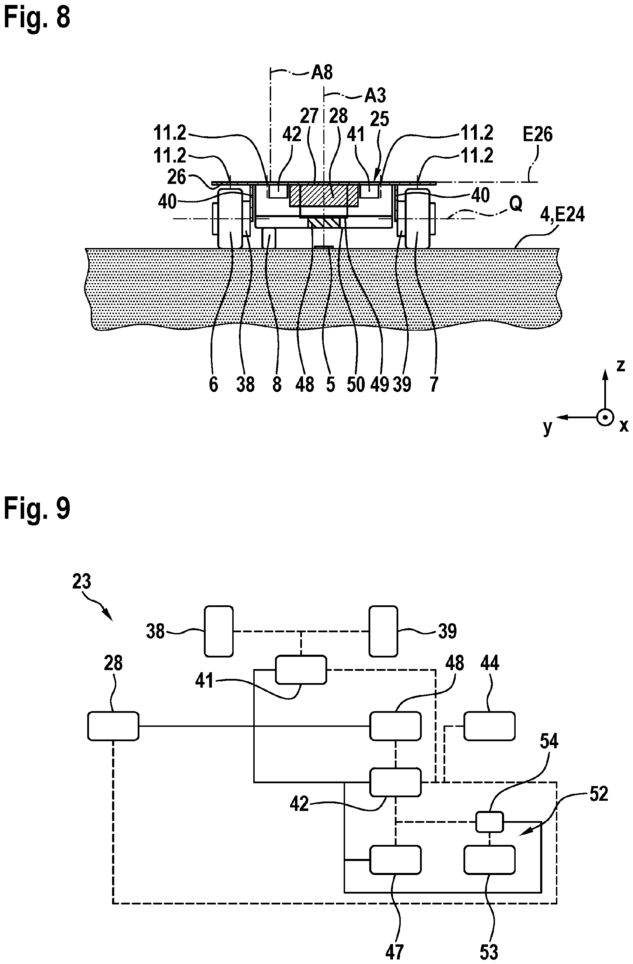

Das Bordnetz 23 ist in der Figur 9 schematisch dargestellt. Es weist einen im Fahrzeug 3 fest verbauten elektrischen Energiespeicher 28, insbesondere eine Batterie, und eine Ladeschnittstelle 29 zum Aufladen des Energiespeichers 28 an einer externen Ladestation auf. Es versteht sich von selbst, dass der Energiespeicher 28 bei Defekt ausgetauscht werden kann. Die Ladeschnittstelle 29 kann in dem Elektrogehäuse 22 von außen zugänglich angeordnet sein. Das Elektrogehäuse 22 ist an dem Fahrzeugkörper 25 gehalten und kann aus einem formstabilen Kunststoff hergestellt sein. Vorzugsweise weist das Elektrogehäuse 22 eine konkav geformte Stirnseite 30 auf. Die Wölbung der Stirnseite 30 ist zumindest in etwa gegengleich zur Wölbung der Seitenwand 12 geformt. Dies ist von Vorteil, wenn die Kannenvorrichtung 1 mit einer anderen Kannenvorrichtung 1 oder einer Standardkanne in Berührung kommt, da sich die andere Kanne an der gewölbten Stirnseite 30 anlegen kann. Dies kann beispielsweise in einem Kannenwechsler der Fall sein, wenn die Kannenvorrichtung 1 gegen eine andere Kanne verschoben wird ("Kanne gegen Kanne"-Prinzip). Weiterhin kann am Elektrogehäuse 22 ein Ein/Aus-Schalter 31 von außen zugänglich angeordnet sein, um die Stromversorgung zwischen dem Energiespeicher 28 und den übrigen Komponenten des Bordnetzes 23 manuell unterbrechen zu können.

Des Weiteren umfasst das Bordnetz 23 eine elektrisch betriebene Antriebseinheit 32, die, hier exemplarisch, mit den Laufrädern 6, 7 antriebsverbunden ist. Die beiden Laufräder 6, 7 sind als Starrräder ausgebildet, die in der Längsrichtung X ausgerichtet und in der Querrichtung Y beabstandet zueinander angeordnet sind. Sie weisen in Bezug auf den Fahrzeugkörper 25 fest liegende Drehachsen 33, 34 auf, die auf einer gedachten Gerade liegen, auf welcher die Gierachse A3 des Fahrwerks 3 normal steht. In den Figuren 6 und 7 ist erkennbar, dass die gedachte Gerade und die Diagonale D2 des mit gestrichelter Linie angedeuteten Behälterbodens 13 parallel zueinander sind und in einer gemeinsamen Ebene liegen. Die gedachte Gerade teilt den Fahrzeugkörper 25 in der Längsrichtung X in einen Vorderabschnitt 35 und einen Hinterabschnitt 36. Die beiden Abschnitte 35, 36 können gleich groß sein, sodass die gedachte Gerade in einer von der Querrichtung Y und der Hochrichtung Z aufgespannten Mittelebene E3 liegt. Der Fahrzeugkörper 25 kann symmetrisch zur Mittelebene E3 ausgebildet sein. Das Elektrogehäuse 22 ist am Hinterabschnitt 36 gehalten und steht über eine Hinterkante 37 des Fahrzeugkörpers 25 über.

Die Antriebseinheit 32 umfasst je Starrrad 6, 7 einen Elektromotor 38, 39, insbesondere einen Radnabenmotor. Die als Radnabenmotoren ausgebildeten Elektromotoren 38, 39 können in den Starrrädern 6, 7 integriert sein. Die Elektromotoren 38, 39 sind an von der Grundplatte 27 abragenden Gehäusestreben 40 des Fahrzeugkörpers 25 angeordnet, sodass die Starrräder 6, 7 hinter der Stützebene E26 zurückbleiben. Weiterhin weist die Antriebseinheit 32 je Elektromotor 38, 39, hier exemplarisch, einen Servo-Umrichter auf, die hier in einem Doppelumrichter 41 baulich zusammengefasst sind. Statt Servo-Umrichter wären auch Frequenzumrichter oder andere Mittel zur Erzielung der vergebenen Drehzahl der Elektromotoren 38, 39 eingesetzt werden. Der Doppelumrichter 41 ist mit den beiden Elektromotoren 38, 39 und dem elektrischen Energiespeicher 28 verbunden. Mittels des Doppelumrichters 41 können die beiden Elektromotoren 38, 39 gleichläufig oder gegenläufig und mit zueinander gleichen oder unterschiedlichen Drehgeschwindigkeiten betrieben werden. Dadurch kann das Fahrzeug 3 gelenkt und bei gegenläufiger Ansteuerung auch auf der Stelle, respektive um die Gierachse A3 gedreht werden. Zum Steuern der Elektromotoren 38, 39 ist der Doppelumrichter 41 mit einer Steuerungseinheit 42 des Bordnetzes 23 verbunden.

Die Steuerungseinheit 42, die eine speicherprogrammierbare Steuerung mit einem programmierbaren Speichermedium ist, ist zum Steuern des Fahrzeugs 3 konfiguriert. Sie ist, hier exemplarisch, als Einzelgerät ausgebildet und in einem Steuerungsgehäuse untergebracht. Das Steuerungsgehäuse ist an dem Fahrzeugkörper 25, insbesondere der Unterseite der Grundplatte 27 befestigt. Zur Überwachung des Energiespeichers 28 kann das Bordnetz 23 ein Batteriemanagementsystem aufweisen. Hierzu kann die Steuerungseinheit 42 mit dem Energiespeicher 28 verbunden sein. Zur Kommunikation mit einer übergeordneten Leitsteuerung, einer Textilmaschine oder einem Mobilgerät (Smartphone, Tablet, etc.) kann die Steuerungseinheit 42 mit einem Funkmodul 44 verbunden sein, das in dem Elektrogehäuse 22 untergebracht sein kann.

Des Weiteren weist das Bordnetz 23 eine Leseeinheit 45 auf, die zum Erfassen der auf dem Untergrund angeordneten Leitelemente 5 konfiguriert ist. Die Leseeinheit 45 ist vorzugsweise ausschließlich an einem Funktionsabschnitt 46 des Fahrzeugkörpers 25 angeordnet, der in der Querrichtung Y zwischen den beiden Starrrädern 6, 7 ausgebildet ist. Der Funktionsabschnitt 46 weist eine Breite B46, respektive Erstreckung in der Querrichtung Y von mindestens 250 Millimeter und maximal 1200 Millimeter auf und erstreckt sich in der Längsrichtung X über den Vorderabschnitt 35 und den Hinterabschnitt 36. Damit ist das Fahrzeug 3 für den Transport des, hier, wie eine "Rundkanne" ausgebildeten Aufnahmebehälters 2 dimensioniert. Um an einem als "Rechteckkanne" ausgebildeten Aufnahmebehälter 2 montierbar zu sein, ist das Fahrzeug 3 entsprechend kleiner zu dimensionieren. Dann kann der Funktionsabschnitt 46 auch eine Breite von mindestens 150 Millimeter und maximal 1200 Millimeter aufweisen.

Die Leseeinheit 45 umfasst eine Magnetbandlesevorrichtung 47, die zum berührungslosen Erfassen des Verlaufs von als Magnetbänder 5.1 gestalteten Leitelementen 5 konfiguriert ist. Die Magnetbandlesevorrichtung 47, die auch als Magnetscanner bezeichnet werden kann, ist an einem in der Hauptfahrtrichtung (Vorwärtsfahrt) bzw. in der Längsrichtung X vorne liegenden Ende des Fahrzeugkörpers 25 angeordnet. Die Magnetbandlesevorrichtung 47 weist ein Sensorgehäuse auf, in dem mehrere, zum Beispiel acht, Sensoren in der Querrichtung Y beabstandet voneinander angeordnet sind. Das Sensorgehäuse kann eine Breite, respektive Erstreckung in der Querrichtung Y zwischen 50 Millimeter und 200 Millimeter haben. Der Abstand der Sensoren zum Untergrund, bzw. der Radaufstandsebene kann zwischen 20 Millimeter und 50 Millimeter betragen. Die Breite der Magnetstreifen kann zwischen 6 und 50 Millimeter sein.

Weiterhin weist die Leseeinheit 45 eine RFID-Tag-Lesevorrichtung 48 auf, die zum Auslesen von Informationen von als RFID-Tag 5.2 gestalteten Leitelementen 5 konfiguriert ist. Die RFID-Tag-Lesevorrichtung 48 kann auch als RFID-Lesegerät bezeichnet werden. Die RFID-Tag-Lesevorrichtung 48 ist unter der Grundplatte 27 an einem an der Grundplatte 27 befestigten Gestell 49 angeordnet, um die RFID-Tag-Lesevorrichtung 48 im Betrieb des Fahrzeugs 3 nah über dem Untergrund 4, insbesondere den Leitelementen 5.2 zu halten. Das Gestell 49 umgreift, hier, den Energiespeicher 28, der somit in der Hochrichtung Z zwischen der Grundplatte 27 und der RFID-Tag-Lesevorrichtung 48 angeordnet ist. Mittels der RFID-Tag-Lesevorrichtung 48 können beispielsweise Adressinformationen aus den RFID-Tags 5.2 ausgelesen und an die Steuerungseinheit 42 übermittelt werden. Die RFID-Tags 5.2 haben üblicherweise einen Durchmesser von weniger als 50 Millimeter. Zum Schutz des Bordnetzes 23 ist von unten eine am Fahrzeugkörper 25 angeordnete Unterbodenverkleidung 50 angeordnet, die im Bereich der RFID-Tag-Lesevorrichtung 48 eine Aussparung 51 haben kann.

In der Figur 7 ist erkennbar, dass die als Stützräder ausgebildeten Laufräder 8, 9 in der Querrichtung Y zwischen den beiden Starrrädern 6, 7 und außermittig angeordnet, respektive am Fahrzeugkörper 25 abgestützt sind. Deren Querabstand zur Fahrzeuglängsachse L beträgt, hier exemplarisch, jeweils etwa 90 Millimeter, sodass die beiden Stützräder 8, 9 in der Querrichtung Y einen Abstand von etwa 180 Millimeter zueinander aufweisen. Zwischen den Stützrädern 8, 9 ist der Funktionsabschnitt 46 ausgebildet, der somit frei von den Laufrädern 6, 7, 8, 9 ist, um die Leitelemente 5 im Betrieb der Kannenvorrichtung 1 zu schonen. Grundsätzlich möglich ist aber auch, dass die Stützräder 8, 9 mittig, d. h. auf der Fahrzeuglängsachse L angeordnet sind.

Die Stützräder 8, 9 sind jeweils um eine eigene Schwenkachse A8, A9, die parallel zur Hochachse Z ausgerichtet ist, am Fahrzeugkörper 25 schwenkbar gehalten. Um die Schwenkachsen A8, A9 können die Stützräder 8, 9 frei schwenkbar sein, sodass sie um 360 Grad und mehr schwenken können. Das Stützrad 8, das auch als vorlaufendes Stützrad bezeichnet werden kann, ist am Vorderabschnitt 35 und das Stützrad 9, das auch als nachlaufendes Stützrad bezeichnet werden kann, ist am Hinterabschnitt 36 abgestützt. Das vorlaufende Stützrad 8 ist ungefedert und das nachlaufende Stützrad 9 ist gefedert am Fahrzeugkörper 25 abgestützt. Die Abrollflächen der beiden Stützräder 8, 9 können auf einer gedachten Kreislinie liegen, wie in der Figur 7 gezeigt. Grundsätzlich möglich ist aber auch, dass die Stützräder 8, 9 mit zueinander unterschiedlichem Abstand zur Mittelebene E3, in der die beiden Drehachsen 33, 34 liegen, angeordnet sind. Es ist von Vorteil, wenn der Schwerpunkt des Fahrzeugs 3 in der Mittelebene E3 liegt, in der auch die Fahrzeugquerachse Q verläuft.

Das Fahrzeug 3 hat eine Bauhöhe H3 von, hier exemplarisch, 140 Millimeter. Die Transportfläche 26 schließt das Fahrzeug 3 nach oben hin ab. Somit ist die Bauhöhe H3 bestimmt durch den Abstand der Transportfläche 26 zum Untergrund 4 bzw. zu einer von den Laufrädern 6, 7 aufgespannten Radaufstandsebene E24, die beim Fahren über den Untergrund 4 mit der Bodenebene zusammenfällt.

Somit weist das Fahrzeug 3 eine derart kompakte Bauform auf, dass es im montierten Zustand zumindest im Wesentlichen unter dem Aufnahmebehälter 2, respektive dessen Behälterboden 13 verschwindet. Lediglich einzelne Komponenten, insbesondere aus dem Bordnetz 23, können den Behälterboden 13 seitlich überragen, da hierfür eine technische Notwendigkeit besteht. Hierbei kann es sich beispielweise um die Ladeschnittstelle 29, den Ein/Aus-Schalter 31 und das Funkmodul 44 handeln, die im bzw. am Elektrogehäuse 22 angeordnet sind. Im montierten Zustand sind somit das Fahrwerk 24, die elektrische Antriebseinheit 32, der elektrische Energiespeicher und die Transportfläche 26 vollständig überdeckt. Darüber hinaus kann der Aufnahmebehälter 2 bzw. dessen Behälterboden 13, wie in den Figuren 1 bis 8 erkennbar, auch die Grundplatte 27 sowie die Befestigungselemente 11.2 vollständig und das Bordnetz 23 zumindest im Wesentlichen überdecken. Vom Bordnetz 23 können insbesondere die Steuerungseinheit 42 und die Leseeinheit 45 überdeckt sein.

Weiterhin kann das Bordnetz 23 eine Sicherheitseinrichtung 52 zur Stoßerkennung aufweisen. Diese kann Komponenten haben, die außerhalb des vom Aufnahmebehälter 2 überdeckten Bereichs liegen, um frühestmöglich einen Zusammenprall mit einem Hindernis detektieren zu können. Zum Beispiel kann eine Berührungssensorik 53 im Stoßfänger 19 integriert sein, die mit der Steuerungseinheit 42 verbunden ist, um bei Stoßerkennung das Fahrzeug 3 zu stoppen. Die Sicherheitseinrichtung 52 kann ein Sicherheitsrelais 54 umfassen, um das Bestehen der Verbindung zwischen der Berührungssensorik 53 und der Steuerungseinheit 42 zu überwachen. Dadurch kann die Berührungssensorik 53 beispielsweise ein Schließer (Schließkontakt) sein, der beim Zusammenprall geschlossen wird. Hierzu kann der Stoßfänger 19 vorzugsweise aus einem nachgiebigen Material sein, sodass beim insbesondere elastischen Zusammendrücken des Stoßfängers der Schließkontakt geschlossen wird. Zum Beispiel weist die Berührungssensorik 53 zwei Drähte auf, von denen der eine an den Minuspol und der andere an den Pluspol des Energiespeichers 28 angeschlossen sind. Grundsätzlich möglich ist aber auch, statt des kostengünstigen Schließerkontakts auch einen Öffnerkontakt zu verwenden.

Aus Sicherheitsgründen kann vorgesehen sein, dass die Antriebseinheit 32 ausgelegt ist, das Fahrzeug 3 mit einer Fahrgeschwindigkeit von maximal 0,5 Meter pro Sekunde und weiter bevorzugt von maximal 0,3 Meter pro Sekunde über den Untergrund 4 zu fahren. Weiterhin kann die Antriebseinheit 32 ausgelegt sein, um die maximale Fahrgeschwindigkeit bis zu einem Gesamtgewicht von maximal 200 Kilogramm zu ermöglichen.

In den Figuren 6 und 7 ist erkennbar, dass die Fläche der Grundplatte 27 kleiner als diejenige des Behälterbodens 13 ist. Die Grundplatte 27 kann in Draufsicht der Form eines Vieleckes haben und ist hier, lediglich exemplarisch, als Oktagon, das heißt mit acht Ecken und acht Seiten, ausgebildet. In den sich gegenüber dem runden Behälterboden 13 bildenden vier Eckbereichen, in denen der Behälterboden 13 die Grundplatte 13 überragt, können im Behälterboden 13 (nicht gezeigte) Bohrungen ausgebildet sein, durch die sich im Füllraum 15 ansammelnde kleinere Bandreststücke oder sonstiger Schmutz nach unten durch den Technikraum 16 rausfallen und auf den Untergrund 4 rieseln kann. Die Bohrungen sind dabei vorzugsweise zwischen dem jeweiligen Starrrad 6, 7 und dem Funktionsabschnitt 14.

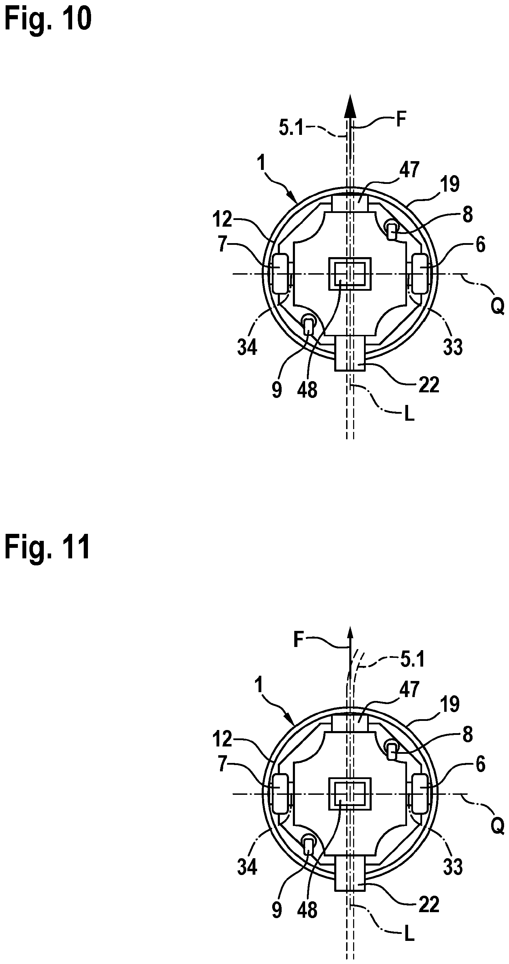

In den Figuren 10 bis 15 sind verschiedene Situationen gezeigt, die sich im Betrieb der Kannenvorrichtung 1 bzw. des Fahrzeugs 3 beim Fahren über die Leitelemente 5 ergeben können. Um das Fahrverhalten des Fahrzeugs 3 besser darstellen zu können, ist die Unterseite des Fahrzeugs 3 mit Blick von unten durch den der Veranschaulichung halber durchsichtig dargestellten Untergrund 4 gezeigt. Die am Untergrund 4 angeordneten Leitelemente 5 sind mit gestrichelten Linien dargestellt.

Bei Fahrt in der Hauptfahrtrichtung (Vorwärtsfahrt), die in der Figur 10 mit dem Pfeil F verdeutlicht ist, folgt das Fahrzeug 3 dem Magnetbandstreifen 5.1. Hierzu steuert die Steuerungseinheit 42 anhand der von der in der Hauptfahrtrichtung F vorneliegenden Magnetbandlesevorrichtung 47 erhaltenen Signale, um den Magnetbandstreifen 5.1 mittig zwischen den beiden Starrrädern 6, 7 zu halten. Die beiden Elektromotoren 38, 39 werden gleichlaufend und mit gleicher Drehzahl betrieben. Die Stützräder 8, 9 sind ebenfalls in der Hauptfahrtrichtung F ausgerichtet.

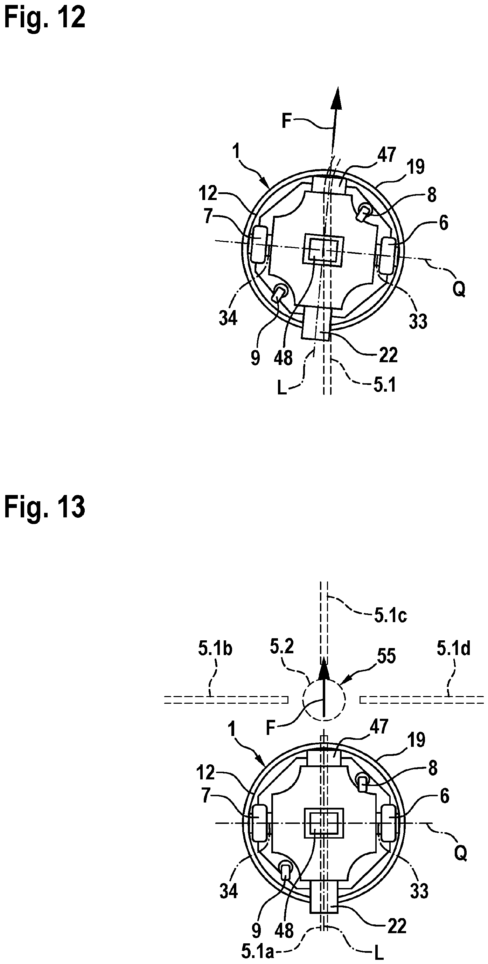

In der Figur 11 nähert sich das Fahrzeug 3 einer durch den Magnetbandstreifen 5.1 vorgegebenen Rechtskurve, wobei sich das Fahrzeug 3 noch in der Geradeausfahrt befindet. Sobald der Magnetbandstreifen 5.1 aus der Mitte des Sensorfeldes der Magnetbandlesevorrichtung 47 läuft (Mittenabweichung), ändert sich das Sensorbelegungsbild. In der Figur 12 ist erkennbar, dass der Magnetbandstreifen 5.1 nun in den Erfassungsbereich der zur Kurveninnenseite hin angeordneten Sensoren der Magnetbandlesevorrichtung 47 wandert. Anhand des sich während der Fahrt verändernden Sensorbelegungsbildes kann die Steuerungseinheit 41 bestimmen, wie stark nachgesteuert werden muss, um das Fahrzeug 3 möglichst mittig über dem Magnetband zu halten. Dies erfolgt durch Anpassen der Drehzahlen der Elektromotoren 38, 39 relativ zueinander. Je weiter der Magnetbandstreifen 5.1 aus der Mitte läuft, umso stärker muss der Drehzahlunterschied ausfallen. Die frei schwenkbaren Stützräder 8, 9 folgen der Fahrtrichtung. Das Lenken des Fahrzeugs 3 erfolgt somit nur über Drehzahländerungen der Elektromotoren 38, 39.

In der Figur 13 nähert sich das Fahrzeug 3 einem Knotenpunkt 55, an dem sich, hier exemplarisch, vier Wege kreuzen, die durch vier Magnetbandstreifen 5.1a, b, c, d vorgegeben sind. In der Mitte des Knotenpunktes 55 ist ein RFID-Tag 5.2 angeordnet, von dem die Magnetbandstreifen 5.1 beabstandet sind. Im RFID-Tag 5.2 sind Adressinformationen hinterlegt, die den Knotenpunkt 55 eindeutig identifizierbar machen. Das Fahrzeug 3 wird so lange weiter geradeaus fahren, bis die RFID-Tag-Lesevorrichtung 48 den RFID-Tag 5.2 erfasst. Um zu vermeiden, dass die Steuerungseinheit 42 aufgrund des Abstands des Magnetbandstreifens 5.1a vom RFID-Tag 5.2 durch Lenkbewegungen den Magnetbandstreifen 5.1 sucht, kann in der Steuerungseinheit 42 ein Delay (Verzögerung) hinterlegt sein, der ausreichend lang ist (bspw. 1-2 Sekunden), sodass das Fahrzeug 3 weiter geradeausfährt, bis die RFID-Tag-Lesevorrichtung 48 den RFID-Tag 5.2 erfasst. Die ausgelesenen RFID-Daten werden an die Steuerungseinheit 42 übermittelt. Dort kann eine feste Route hinterlegt sein. Ebenso kann die Steuerungseinheit 42 auch mit einer übergeordneten Leitsteuerung kommunizieren und aktuelle Fahranweisungen erhalten, sodass das Fahrzeugs 3 bedarfsgerecht gesteuert werden kann.

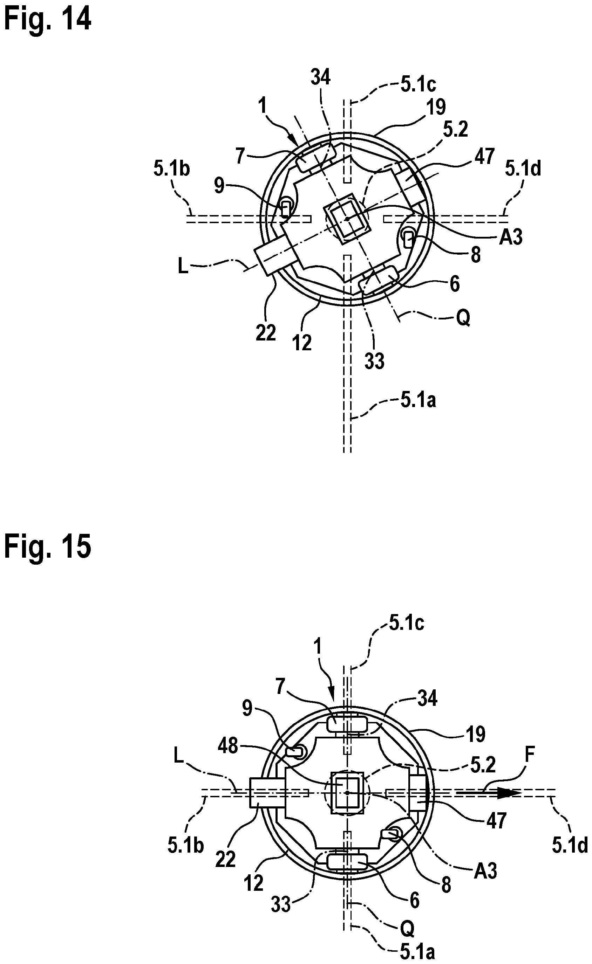

In der sich in der Figur 14 zeigenden Situation hat die Steuerungseinheit 42 eine Linksdrehung vorgegeben, um am Knotenpunkt 55 abzubiegen. Die Steuerungseinheit 42 dreht das Fahrzeug 3 am Knotenpunkt 55 durch Ansteuern der Elektromotoren 38, 39 mit gegenläufigen Drehrichtungen. Der linke Elektromotor 38 dreht das linke Starrrad 6 rückwärts und der rechte Elektromotor 39 dreht das rechte Starrrad 7 vorwärts. Das Fahrzeug 3 dreht auf der Stelle um seine Gierachse A3 und bleibt somit über der Mitte des Knotenpunktes 55. Die RFID-Tag-Lesevorrichtung 48 behält während des gesamten Drehvorgangs den RFID-Tag 5.2 im Erfassungsbereich, respektive unter sich.

Nach Durchführung der 90 Grad-Drehung fährt das Fahrzeug 3 in der Hauptfahrtrichtung F dem Magnetbandstreifen 5.1d hinterher, bis ein weiterer RFID-Tag kommt. Statt der hier gezeigten 90 Grad-Drehung ist auch jeder andere Drehwinkel möglich. Am Ende eines Fahrwegs kann eine Textilmaschine, eine Ladestelle, ein Kannenmagazin oder dergleichen stehen, die mittels RFID-Tags gekennzeichnet sein können.

Die vorbeschriebene Verlegung der Magnetbandstreifen 5.1a...5.1d, die am Knotenpunkt 55 beabstandet voneinander sind, hat den Vorteil, dass die von den Leitelementen 5 vorgegebenen Wege in beiden Richtungen befahren werden können. Wenn dies nicht gewünscht ist, weil zum Beispiel zur Kollisionsvermeidung eine definierte Wegrichtung, wie bei einer Einbahnstraße, vorgegeben werden soll, kann am Knotenpunkt 55 auch ein durchgehender Magnetbandstreifen, der sich unterbrechungsfrei über beispielsweise die Magnetbandstreifen 5.1a und 5.1c erstreckt, vorgesehen sein. Der RFID-Tag 5.2 kann dann auf dem Magnetbandstreifen 5.1a, 5.1c. aufgebracht sein.

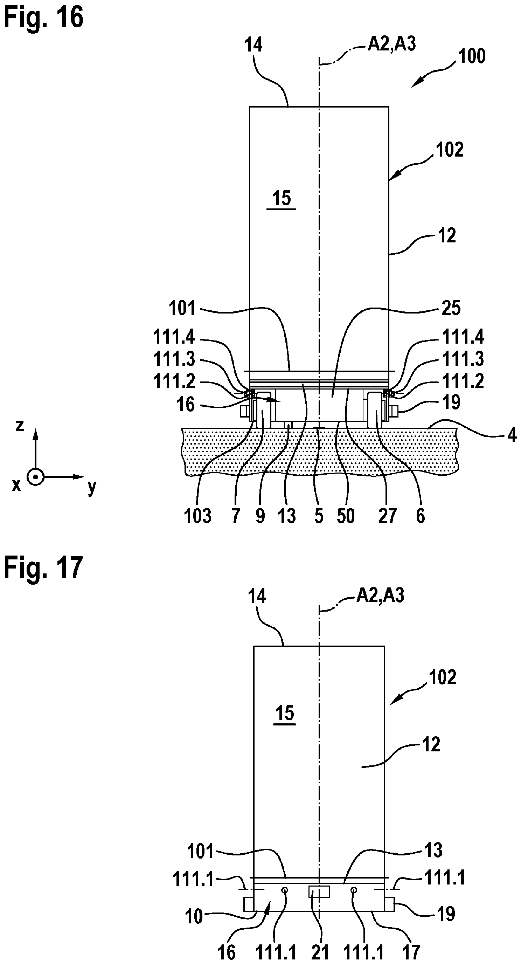

In der Figur 16 ist eine Kannenvorrichtung 100 gemäß einer zweiten Ausführungsform dargestellt, die derjenigen aus den Figuren 1 bis 15 weitestgehend entspricht, sodass hinsichtlich der Gemeinsamkeiten auf die obige Beschreibung Bezug genommen wird. Dabei sind gleiche beziehungsweise abgewandelte Einzelheiten mit den gleichen Bezugszeichen versehen, wie in den Figuren 1 bis 15. Der Unterschied besteht in der Befestigung des, hier exemplarisch, mit einem rechteckigen Querschnitt ausgebildeten Aufnahmebehälters 102 am Fahrzeug 3. In der Figur 16 ist der montierte Zustand gezeigt. In den Figuren 17 und 18 sind weitere Details zum erfindungsgemäßen Aufnahmebehälter 102 der Kannenvorrichtung 100 gezeigt.

Der Aufnahmebehälter 102 weist, wie eine herkömmliche "Rechteckkanne", einen entlang der Seitenwand 12 in der Höhe verschiebbar geführten Füllboden 101 auf, auf dem das Faserband ablegbar ist. In der Figur 17 ist erkennbar, dass der Aufnahmebehälter 102 behälterseitige Befestigungselemente 111.1 umfasst, die, hier wegen des Stoßfängers 19, als geschlossene Bohrungen, insbesondere Rundbohrungen in dessen Seitenwand 12 ausgebildet sind. Weiterhin ist in der Figur 18 zu erkennen, dass die innenliegende Stützstruktur 13 des Aufnahmebehälters 102, hier exemplarisch, Stützstreben umfasst, die den Innenraum in den nach oben hin offenen Füllraum 15 und den nach unten hin offenen Technikraum 16 teilt. Die Stützstruktur 13 ist im montierten Zustand mit einem horizontalen Abschnitt 26.1 der Transportfläche 26 an der Oberseite der Grundplatte 27 des Fahrzeugs 3 in Anlage. Neben dem horizontalen Abschnitt 26.1 ist der Aufnahmebehälter 102 mit einem nach außen gerichteten Abschnitt 26.2 der Transportfläche 26 des Fahrzeugs 3 in Anlage. Hierzu weist das Fahrzeug 3 einen parallel zur Gierachse A3 ausgerichteten Kragen 103 auf, der an der Grundplatte 27 angeformt ist und von diesem nach unten abragt, wie in der Figur 16 gezeigt. Im Kragen 103 sind fahrzeugseitige Befestigungselemente 111.2 in Form von Durchgangsbohrungen ausgebildet, die im montierten Zustand mit den behälterseitigen Bohrungen 111.1 fluchten. Zum Verspannen der Seitenwand 12 gegen den Kragen 103 sind Bolzen vorgesehen, die durch die Bohrungen 111.1, 111.2 greifen, wobei beidseits Muttern 111.3, 111.4 auf die Bolzen aufgeschraubt sein können. Alternativ können die Bolzen zum Beispiel in den Kragen 103 eingeschraubt sein.

In der Figur 19 ist eine Kannenvorrichtung 200 gemäß einer dritten Ausführungsform dargestellt, die derjenigen aus den Figuren 1 bis 15 bzw. derjenigen aus den Figuren 16 bis 18 weitestgehend entspricht, sodass hinsichtlich der Gemeinsamkeiten auf die obige Beschreibung Bezug genommen wird. Dabei sind gleiche beziehungsweise abgewandelte Einzelheiten mit den gleichen Bezugszeichen versehen, wie in den Figuren 1 bis 15 bzw. 16 bis 18. Der Unterschied besteht in der Ausgestaltung des, hier exemplarisch, mit einem runden Querschnitt ausgebildeten Aufnahmebehälters 202. In der Figur 19 ist der montierte Zustand gezeigt.

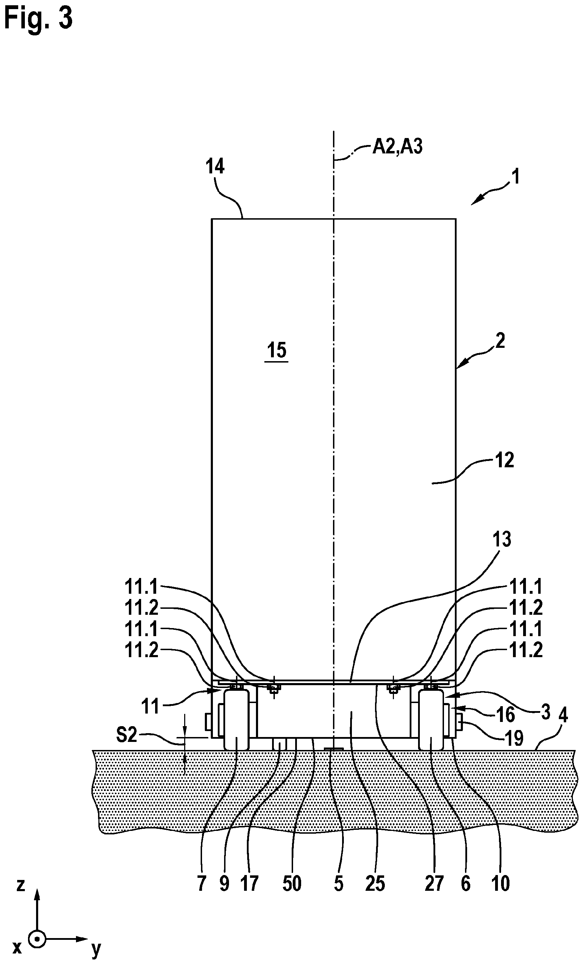

Der Aufnahmebehälter 202 weist eine hülsenförmige Grundform auf, bei der der Behälterboden 13 mit der Unterseite des Aufnahmebehälters 202 bündig abschließt. Somit weist der Aufnahmebehälter 202 keinen Technikraum auf, in dem das Fahrzeug 3 eingesetzt werden kann. Vielmehr ist der Aufnahmebehälter 202 flächig auf der Grundplatte 27 des Fahrzeugs 3 aufgestellt. Die Befestigungsmittel 11 sind, wie in der Figur 3 zur ersten Ausführungsform gezeigt, vom Aufnahmebehälter 2 verdeckt. Die behälterseitigen Befestigungselemente 11.1 sind, hier exemplarisch, ebenfalls als Gewindebolzen ausgebildet, die parallel zur Behälterachse A2 ausgerichtet sind und durch fahrzeugseitige Befestigungselemente 11.2 in Form von Durchgangsbohrungen greifen. An der Unterseite der Grundplatte 27 sind Muttern 11.3 auf die Gewindebolzen 11.1 aufgeschraubt, um den Behälterboden 13 gegen die Transportfläche 27 zu verspannen.

Weiterhin ist in der Figur 19 erkennbar, dass der Stoßfänger 19 am Fahrzeug 3 angeordnet sein kann. Hierzu kann das Fahrzeug 3 einen parallel zur Gierachse A3 ausgerichteten Kragen 103 aufweisen, der an der Grundplatte 27 angeformt sein kann und von diesem nach unten abragen kann. Der Stoßfänger 19 kann von außen am Kragen 103 befestigt sein. Im Stoßfänger 19 kann ebenfalls eine mit der Steuerungseinheit 42 gekoppelte Berührungssensorik 53 zur Stoßerkennung integriert sein.

**Bezugszeichen**

| | | | |
|---|---|---|---|
| 1, 100, 200 | Kannenvorrichtung | 36 | Hinterabschnitt |
| 2, 102, 202 | Aufnahmebehälter | 37 | Hinterkante |
| 3 | Fahrzeug | 38 | Elektromotor |
| 4 | Untergrund | 39 | Elektromotor |
| 5 | Leitelement | 40 | Gehäusestrebe |
| 6 | Laufrad, bzw. Starrrad | 41 | Doppelumrichter |
| 7 | Laufrad, bzw. Starrrad | 42 | Steuerungseinheit |
| 8 | Laufrad, bzw. Stützrad | | |
| 9 | Laufrad, bzw. Stützrad | 44 | Funkmodul |
| 10 | Behälterunterseite | 45 | Leseeinheit |
| 11, 111 | Befestigungsmittel | 46 | Funktionsabschnitt |
| 12 | Seitenwand | 47 | Magnetbandlesevorrichtung |
| 13 | Stützstruktur | 48 | RFID-Tag-Lesevorrichtung |
| 14 | Füllöffnung | 49 | Gestell |
| 15 | Füllraum | 50 | Unterbodenverkleidung |
| 16 | Technikraum | 51 | Aussparung |
| 17 | Behälteröffnung | 52 | Sicherheitseinrichtung |
| 18 | Bodenunterseite | 53 | Berührungssensorik |
| 19 | Stoßfänger | 54 | Sicherheitsrelais |
| 20 | Ringende | 55 | Knotenpunkt |
| 21 | Wandöffnung | 101 | Füllboden |
| 22 | Elektrogehäuse | 103 | Kragen |
| 23 | Bordnetz | | |
| 24 | Fahrwerk | A | Achse |
| 25 | Fahrzeugkörper | B | Erstreckung in Querrichtung, bzw. Breite |
| 26 | Transportfläche | D | Durchmesser bzw. Diagonale |
| 27 | Grundplatte | E | Ebene |
| 28 | Energiespeicher | F | Hauptfahrtrichtung |
| 29 | Ladeschnittstelle | H | Erstreckung in Hochrichtung bzw. Höhe |
| 30 | Stirnseite | L | Fahrzeuglängsachse |
| 31 | Ein/Aus-Schalter | S | Abstand |
| 32 | Antriebseinheit | Q | Fahrzeugquerachse |
| 33 | Drehachse | X | Längsrichtung |
| 34 | Drehachse | Y | Querrichtung |
| 35 | Vorderabschnitt | Z | Hochrichtung |

## Patentansprüche

1. Selbstfahrendes Fahrzeug (3) zum Transportieren eines Aufnahmebehälters (2; 102; 202) für ein Faserband zwischen faserbandabliefernden und faserbandgespeisten Textilmaschinen über einen Untergrund (4),
wobei das Fahrzeug (3) ein Fahrwerk (24) mit mehreren Laufrädern (6, 7, 8, 9), einen vom Fahrwerk (24) getragenen Fahrzeugkörper (25), eine am Fahrzeugkörper (25) angeordnete Transportfläche (26) für den Aufnahmebehälter (2; 102; 202), Befestigungselemente (11.2) zum Befestigen des Aufnahmebehälters (2; 102; 202) am Fahrzeugkörper (25) und ein am Fahrzeugkörper (25) angeordnetes Bordnetz (23) mit einem elektrischen Energiespeicher (28), einer elektrischen Antriebseinheit (32) und einer Steuerungseinheit (42) aufweist, **dadurch gekennzeichnet,**
**dass** das Fahrzeug (3) derart dimensioniert ist, dass in einem montierten Zustand, in dem der Aufnahmebehälter (2; 102; 202) mit der Transportfläche (26) in Anlage und am Fahrzeugkörper (25) befestigt ist, der Aufnahmebehälter (2) das Fahrwerk (24), die elektrische Antriebseinheit (32), den elektrischen Energiespeicher (28) und die Transportfläche (26) vollständig überdeckt.

2. Selbstfahrendes Fahrzeug (3) nach Anspruch 1, **dadurch gekennzeichnet, dass** die Befestigungselemente (11.2) am Fahrzeugkörper (25) derart angeordnet sind, dass die Befestigungselemente (11.2) im montierten Zustand von dem Aufnahmebehälter (2) überdeckt sind.

3. Selbstfahrendes Fahrzeug (3) nach Anspruch 1 oder 2, **dadurch gekennzeichnet, dass** der Fahrzeugkörper (25) eine Grundplatte (27) aufweist, an der die Befestigungselemente (11.2) angeordnet sind, wobei eine vom Fahrwerk (24) abgewandte Oberseite der Grundplatte (27) die Transportfläche (26) umfasst.

4. Selbstfahrendes Fahrzeug (3) nach einem der Ansprüche 1 bis 3, **dadurch gekennzeichnet, dass** zumindest zwei der Laufräder (6, 7) als Starrräder, die in Längsrichtung (X) des Fahrzeuges (3) ausgerichtet und in Bezug auf den Fahrzeugkörper (25) fest liegende Drehachsen (33, 34) aufweisen, und zumindest eines der Laufräder (8, 9) als Stützrad, das um eine Schwenkachse (A8, A9) schwenkbar gestaltet ist, ausgebildet sind.

5. Selbstfahrendes Fahrzeug (3) nach Anspruch 4, **dadurch gekennzeichnet, dass** die Drehachsen (33, 34) auf einer gedachten Gerade liegen, auf welche die Gierachse (A3) des Fahrwerks (24) normal steht.

6. Selbstfahrendes Fahrzeug (3) nach Anspruch 4 oder 5, **dadurch gekennzeichnet, dass** die Antriebseinheit (32) mit den beiden Starrrädern (6, 7) antriebsverbunden ist und je Starrrad (6, 7) einen Elektromotor (38, 39), insbesondere einen Radnabenmotor aufweist.

7. Selbstfahrendes Fahrzeug (3) nach einem der Ansprüche 1 bis 6, **dadurch gekennzeichnet, dass** das Bordnetz (23) eine Leseeinheit (45) aufweist, die zum Erfassen von am Untergrund (4) angeordneten Leitelementen (5) konfiguriert ist, wobei die Leseeinheit (45) an einem Funktionsabschnitt (46) des Fahrzeugkörpers (25) angeordnet ist, wobei der Funktionsabschnitt (46) in einer Querrichtung (Y) des Fahrwerks (24) zwischen zwei in der Querrichtung (Y) voneinander beabstandeten Laufrädern (6, 7) ausgebildet ist.

8. Selbstfahrendes Fahrzeug (3) nach Anspruch 7, **dadurch gekennzeichnet, dass** die Leseeinheit (45) eine Magnetbandlesevorrichtung (47), die zum Erfassen des Verlaufs von als Magnetband (5.1) gestalteten Leitelementen (5) konfiguriert ist, und eine RFID-Tag-Lesevorrichtung (48), die zum Auslesen von Informationen von als RFID-Tag (5.2) gestalteten Leitelementen (5) konfiguriert ist, aufweist.

9. Selbstfahrendes Fahrzeug (3) nach Anspruch 8, **dadurch gekennzeichnet, dass** die Magnetbandlesevorrichtung (47) an einem in der Längsrichtung (X) vorne liegenden Ende des Fahrzeugkörpers (25) und die RFID-Tag-Lesevorrichtung (48) mittig zwischen dem in der Längsrichtung (X) vorneliegenden Ende und einem in der Längsrichtung (X) hinten liegenden Ende des Fahrzeugkörpers (25) angeordnet ist.

10. Selbstfahrendes Fahrzeug (3) nach einem der Ansprüche 7 bis 9, **dadurch gekennzeichnet, dass** am Funktionsabschnitt (46) eine Ladeschnittstelle (29) zum Laden des Energiespeichers (28) angeordnet ist, wobei die Ladeschnittstelle (29) im montierten Zustand außerhalb des Aufnahmebehälters (2; 102; 202) angeordnet ist oder diesen seitlich überragt.

11. Selbstfahrendes Fahrzeug (3) nach einem der Ansprüche 7 bis 10, **dadurch gekennzeichnet, dass** das zumindest eine Stützrad (8, 9) außerhalb des Funktionsabschnitts (46) angeordnet ist.

12. Selbstfahrendes Fahrzeug (3) nach einem der Ansprüche 1 bis 11, **dadurch gekennzeichnet, dass** das Bordnetz (23) an einer von der Transportfläche (26) abgewandten Unterseite des Fahrzeugkörpers (25) angeordnet ist.

13. Kannenvorrichtung (1) mit einem Aufnahmebehälter (2; 102; 202) für ein Faserband zum Transportieren des Aufnahmebehälters (2) zwischen faserbandabliefernden und faserbandgespeisten Textilmaschinen über einen Untergrund (4), **dadurch gekennzeichnet, dass** die Kannenvorrichtung (1) ein selbstfahrendes Fahrzeug (3) nach einem der Ansprüche 1 bis 12 umfasst, wobei der Aufnahmebehälter (2; 102; 202) mit der Transportfläche (26) des selbstfahrenden Fahrzeugs (3) in Anlage und an dem Fahrzeugkörper (25) befestigt ist, wobei der Aufnahmebehälter (2; 102; 202) das Fahrwerk (24), die elektrische Antriebseinheit (32) und die Transportfläche (26) vollständig überdeckt.

14. Kannenvorrichtung (1) nach Anspruch 13, **dadurch gekennzeichnet, dass** der Aufnahmebehälter (2; 102) eine zurückgesetzte Stützstruktur (13) aufweist, wobei die Stützstruktur (13) den Aufnahmebehälter (2; 102) in einen nach oben hin offenen Füllraum (15) zum Aufnehmen des Faserbands und in einen nach unten hin offenen Technikraum (16), in dem das Fahrzeug (3) eingesetzt ist, unterteilt.

15. Kannenvorrichtung (1) nach Anspruch 13 oder 14, **dadurch gekennzeichnet, dass** der Aufnahmebehälter (2; 102; 202) und das Fahrzeug (3) mittels Befestigungsmittel (11) gegeneinander verspannt sind, wobei die Befestigungsmittel (11) vollständig vom Aufnahmebehälter (2; 202) überdeckt sind oder fahrzeugseitige Befestigungselemente (111.2) durch in einer den Füllraum (15) begrenzenden Seitenwand (12) des Aufnahmebehälters (102) ausgebildeten behälterseitige Befestigungselemente (111.1) nach außen über den Aufnahmebehälter (102) vorstehen.
